# EUROPEAN PATENT SPECIFICATION

(11) **EP 3 950 759 B1**
(45) Date of publication and mention of the grant of the patent: **11.06.2025**
(21) Application number: 20784997.7
(22) Date of filing: 26.03.2020
(51) Int. Cl.: C08G 18/80, B05D 1/36, B05D 3/02, B05D 7/24, B32B 27/40, C08G 18/00, C08G 18/10, C08G 18/28, C08G 18/48, C08G 18/62, C08G 18/73, C09D 133/00, C09D 175/04, C09D 201/00, B05D 7/00, B05D 1/04, C08G 18/44, C08G 18/70, C08G 18/79, C09D 133/06

(54) **BLOCKED ISOCYANATE, PRODUCING METHOD OF MULTILAYER FILM, AND MULTILAYER FILM**
BLOCKIERTES ISOCYANAT, VERFAHREN ZUR HERSTELLUNG EINES MEHRSCHICHTIGEN FILMS UND MEHRSCHICHTIGER FILM
ISOCYANATE BLOQUÉ, PROCÉDÉ DE PRODUCTION D'UN FILM MULTICOUCHE ET FILM MULTICOUCHE

(30) Priority: 29.03.2019 JP 2019068478; 29.03.2019 JP 2019068477
(43) Date of publication of application: 09.02.2022
(73) Proprietor: Mitsui Chemicals, Inc., Tokyo 104-0028 (JP)
(72) Inventor: FUKUDA, Kazuyuki, Sodegaura-shi, Chiba 299-0265 (JP); KOBAYASHI, Takeshi, Sodegaura-shi, Chiba 299-0265 (JP); SHIBATA, Tatsuya, Sodegaura-shi, Chiba 299-0265 (JP); KOYAMA, Yohei, Sodegaura-shi, Chiba 299-0265 (JP)
(74) Representative: Hoffmann Eitle
(86) International application number: PCT/JP2020/013516
(87) International publication number: WO 2020/203601

(56) References cited:
- EP-A1- 3 730 529
- JP-A- 2014 091 759
- JP-A- 2014 091 768
- JP-A- 2014 172 941
- JP-A- H04 234 418
- JP-A- H09 302 069
- JP-A- H10 101 638

## Description

### TECHNICAL FIELD

The present invention relates to a blocked isocyanate, a method for producing a multilayer film, and a multilayer film.

### BACKGROUND ART

A polyurethane coating film is usually formed by mixing a polyol component and a polyisocyanate component to prepare a coating material composition, and applying the coating material composition to an object to be applied and cured.

In such a polyisocyanate component, in order to reduce the use of an organic solvent from the viewpoint of reducing an environmental load and improving the working environment, a water-dispersed polyisocyanate which is dispersed in water for use is desired.

For example, a blocked isocyanate in which an isocyanate group is blocked by a blocking agent and is modified by a hydrophilic compound having an active hydrogen group has been proposed (ref: for example, Patent Document 1).

Then, in Patent Document 1, for example, a 2,2,6,6-tetramethylpiperidine and the like is illustrated as a blocking agent.

EP 3 730 529 A1 describes a blocked isocyanate that contains a first latent isocyanate group in which the isocyanate group is blocked with a first blocking agent and a second latent isocyanate group in which the isocyanate group is blocked with a second blocking agent. The first blocking agent is represented by general formula (1) and has a higher catalyst activity that activates the isocyanate group than that of the second blocking agent, and the polyisocyanate compound is a reaction product of a high molecular weight polyol having a number average molecular weight of 250 or more and polyisocyanate In formula (1), R¹ to R³ represent a hydrocarbon group having 1 to 12 carbon atoms or a hydrogen atom and at least one of R¹ to R³ represents a hydrogen atom, and R¹ and R³ are optionally bonded to each other to form a heterocycle. R⁴ and R⁵ represent a hydrocarbon group having 1 to 12 carbon atoms, R⁴ and R¹ are optionally bonded to each other to form a heterocycle, and R⁵ and R³ are optionally bonded to each other to form a heterocycle).

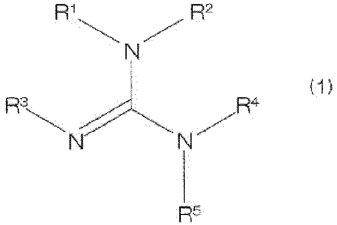

JP 4-234418 A describes blocked (cyclo)aliphatic polyisocyanates which react with amines even at room temperature, containing certain sterically hindered piperidine derivatives as blocking agents.

### Citation List

### Patent Document

Patent Document 1: Japanese Unexamined Patent Publication No. 2017-82208

### SUMMARY OF THE INVENTION

### PROBLEM TO BE SOLVED BY THE INVENTION

However, the improvement in a pot life is desired for the coating material composition from the viewpoint of workability, and in addition, excellent solvent resistance is required for the polyurethane coating film.

However, when the blocked isocyanate described in Patent Document 1 is used in the coating material composition, the pot life cannot be sufficiently ensured, and the solvent resistance of the polyurethane coating film is also insufficient.

The present invention provides a blocked isocyanate capable of improving a pot life of a polyurethane resin composition, while ensuring water dispersibility, and capable of imparting excellent solvent resistance to a polyurethane resin.

### MEANS FOR SOLVING THE PROBLEM

The present invention includes a blocked isocyanate in which an isocyanate group of a hydrophilic group-containing polyisocyanate being a reaction product of a polyisocyanate and a polyoxyethylene compound is blocked by a blocking agent, wherein the polyisocyanate includes an aliphatic polyisocyanate and/or an araliphatic polyisocyanate, a number average molecular weight of the polyoxyethylene compound is 400 or more and 800 or less, the blocking agent includes a piperidone-based compound shown by the following general formula (1), and the oxyethylene group content in the hydrophilic group-containing polyisocyanate is 1.0% by mass or more and 35% by mass or less. 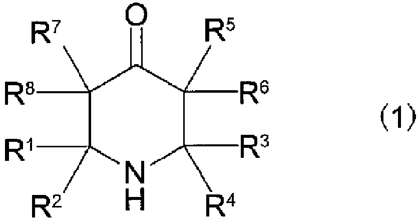 (In general formula (1), each of R¹ to R⁴ represents an alkyl group having 1 to 4 carbon atoms. R¹ to R⁴ may be the same or different from each other. Each of R⁵ to R⁸ represents an alkyl group having 1 to 4 carbon atoms or a hydrogen atom. R⁵ to R⁸ may be the same or different from each other.)

The present invention also includes a method for producing a multilayer film including an intermediate coating layer, a base layer disposed on the intermediate coating layer, and a clear layer disposed on the base layer including an intermediate coating step of applying an intermediate coating material to an object to be applied to form an intermediate coating film, a base step of applying a base coating material onto the intermediate coating film to form a base coating film, a clear step of applying a clear coating material onto the base coating film to form a clear coating film, and a thermosetting step of thermally curing the intermediate coating film, the base coating film, and the clear coating film, wherein the intermediate coating material contains an intermediate coating main agent having a hydroxyl group and an intermediate coating curing agent containing the blocked isocyanate of the invention, the blocked isocyanate contains a latent isocyanate group obtained by blocking an isocyante group of a hydrophilic group-containing polyisocyanate by a blocking agent, and a mole ratio of the latent isocyanate group in the intermediate coating curing agent to the hydroxyl group in the intermediate coating main agent is 0.2 or more and 1.5 or less.

The present invention also includes a multilayer film including an intermediate coating layer, a base layer disposed on the intermediate coating layer, and a clear layer disposed on the base layer, wherein the intermediate coating layer is made of a thermosetting product of an intermediate coating material, the intermediate coating material contains an intermediate coating main agent having a hydroxyl group and an intermediate coating curing agent including the blocked isocyanate of the invention, the blocked isocyanate contains a latent isocyanate group obtained by blocking an isocyante group of a hydrophilic group-containing polyisocyanate by a blocking agent, and a mole ratio of the latent isocyanate group in the intermediate coating curing agent to the hydroxyl group in the intermediate coating main agent is 0.2 or more and 1.5 or less.

### EFFECT OF THE INVENTION

In the blocked isocyanate of the present invention, since the oxyethylene group content in the hydrophilic group-containing polyisocyanate is within the above-described range, it is possible to ensure water dispersibility of the blocked isocyanate. Then, since the polyisocyanate includes the aliphatic polyisocyanate and/or the araliphatic polyisocyanate, and the blocking agent contains the piperidone-based compound shown by the above-described general formula (1), it is possible to impart excellent solvent resistance to the polyurethane resin formed from the polyurethane resin composition, while improving a pot life of the polyurethane resin composition containing the blocked isocyanate.

### BRIEF DESCRIPTION OF THE DRAWINGS

FIG. 1 shows a side cross-sectional view of a multilayer film obtained by one embodiment of a method for producing a multilayer film of the present invention.
FIG. 2 shows a schematic view for illustrating one embodiment of a method for producing a multilayer film of the present invention:
FIG 2A illustrating a preparation step of preparing an object to be applied,
FIG. 2B illustrating an intermediate coating step of applying an intermediate coating material onto the object to be applied, and
FIG. 2C illustrating a base step of applying a base coating material onto an intermediate coating film.
FIG. 3, subsequent to FIG. 2, shows a schematic view for illustrating one embodiment of the method for producing a multilayer film of the present invention:
FIG. 3A illustrating a clear step of applying a clear coating material onto a base coating film and
FIG. 3B illustrating a thermosetting step of thermally curing the intermediate coating film, the base coating film, and a clear coating film.

### DESCRIPTION OF EMBODIMENTS

### <Blocked Isocyanate>

In a blocked isocyanate of the present invention, an isocyanate group of a hydrophilic group-containing polyisocyanate (hydrophilic polyisocyanate) is blocked by a blocking agent.

### (1) Hydrophilic Group-Containing Polyisocyanate

The hydrophilic group-containing polyisocyanate is a reaction product of a polyisocyanate and a polyoxyethylene compound, and has two or more free isocyanate groups.

### (1-1) Polyisocyanate

The polyisocyanate includes an aliphatic polyisocyanate and/or an araliphatic polyisocyanate.

Examples of the aliphatic polyisocyanate include an aliphatic polyisocyanate monomer and an aliphatic polyisocyanate derivative. Examples of the araliphatic polyisocyanate include an araliphatic polyisocyanate monomer and an araliphatic polyisocyanate derivative.

Of the polyisocyanates, first, a polyisocyanate monomer (aliphatic polyisocyanate monomer and an araliphatic polyisocyanate monomer) is described, and next, a polyisocyanate derivative (aliphatic polyisocyanate derivative and an araliphatic polyisocyanate derivative) is described.

Examples of the aliphatic polyisocyanate monomer include aliphatic diisocyanate monomers such as ethylene diisocyanate, trimethylene diisocyanate, 1,2-propylene diisocyanate, butylene diisocyanate (tetramethylene diisocyanate, 1,2-butylene diisocyanate, 2,3-butylene diisocyanate, 1,3-butylene diisocyanate), 1,5-pentamethylene diisocyanate (PDI), 1,6-hexamethylene diisocyanate (HDI), 2,4,4- or 2,2,4-trimethylhexamethylene diisocyanate, and 2,6-diisocyanate methyl caproate.

Further, the aliphatic polyisocyanate monomer includes an alicyclic polyisocyanate monomer. In addition, in the aliphatic polyisocyanate monomer, when the alicyclic polyisocyanate monomer and the above-described aliphatic polyisocyanate monomer are distinguished from each other, the above-described aliphatic polyisocyanate monomer is referred to as a chain aliphatic polyisocyanate monomer.

Examples of the alicyclic polyisocyanate monomer include alicyclic diisocyanate monomers such as 1,3-cyclopentane diisocyanate, 1,3-cyclopentene diisocyanate, cyclohexane diisocyanate (1,4-cyclohexane diisocyanate, 1,3-cyclohexane diisocyanate), 3-isocyanatomethyl-3,5,5-trimethylcyclohexyl isocyanate (isophorone diisocyanate) (IPDI), methylenebis(cyclohexyl isocyanate) (4,4'-, 2,4'-, or 2,2'-methylenebis(cyclohexyl isocyanate), and a trans-trans isomer, trans-cis isomer, and cis-cis isomer of these, or a mixture thereof) (H₁₂MDI), methylcyclohexane diisocyanate (methyl-2,4-cyclohexane diisocyanate, methyl-2,6-cyclohexane diisocyanate), norbornane diisocyanate (various isomers or a mixture thereof) (NBDI), and bis(isocyanatomethyl)cyclohexane (1,3- or 1,4-bis(isocyanatomethyl)cyclohexane or a mixture thereof) (H₆XDI).

Examples of the araliphatic polyisocyanate monomer include araliphatic diisocyanate monomers such as xylylene diisocyanate (1,3- or 1,4-xylylene diisocyanate or a mixture thereof) (XDI), tetramethylxylylene diisocyanate (1,3- or 1,4-tetramethylxylylene diisocyanate or a mixture thereof) (TMXDI), and ω, ω'-diisocyanate-1,4-diethylbenzene.

The polyisocyanate derivative is derived from the above-described polyisocyanate monomer (specifically, an aliphatic polyisocyanate monomer and an araliphatic polyisocyanate). Examples of the polyisocyanate derivative include multimers of the above-described polyisocyanate monomers, low molecular weight polyol derivatives, allophanate derivatives, biuret derivatives, urea derivatives, oxadiazinetrione derivatives, carbodiimide derivatives, and uretonimine derivatives.

Examples of the multimer of the polyisocyanate monomer include dimers, trimers, pentamers, and heptamers of the above-described polyisocyanate monomer (for example, urethodione derivatives, isocyanurate derivatives, and iminooxadiazinedione derivatives).

The low molecular weight polyol derivative of the polyisocyanate monomer is a reaction product of the above-described polyisocyanate monomer and a trihydric alcohol. Examples of the trihydric alcohol include glycerin and trimethylolpropane, and preferably, trimethylolpropane is used. Therefore, as the low molecular weight polyol derivative of the polyisocyanate monomer, preferably, a trimethylolpropane adduct is used.

The allophanate derivative of the polyisocyanate monomer is, for example, a reaction product obtained by reacting the above-described polyisocyanate monomer with a monohydric alcohol or a dihydric alcohol in the presence of a known allophanatization catalyst.

Examples of the monohydric alcohol include methanol, ethanol, propanol, butanol, dodecanol (lauryl alcohol), and octadecanol (stearyl alcohol).

Examples of the dihydric alcohol include ethylene glycol, propylene glycol, 1,3-propanediol, 1,4-butylene glycol, 1,3-butylene glycol, 1,2-butylene glycol, 1,5-pentanediol, 1,6-hexanediol, diethylene glycol, triethylene glycol, dipropylene glycol, 3-methyl-1,5-pentanediol, isosorbide, 1,3- or 1,4-cyclohexanedimethanol and a mixture thereof, 1,4-cyclohexanediol, hydrogenated bisphenol A, 1,4-dihydroxy-2-butene, 2,6-dimethyl-1-octene-3,8-diol, and bisphenol A.

The biuret derivative of the polyisocyanate monomer is, for example, a reaction product obtained by reacting the above-described polyisocyanate monomer with water or amines in the presence of a known biuret-formed catalyst.

The urea derivative of the polyisocyanate monomer is, for example, a reaction product of the above-described polyisocyanate monomer and a diamine.

The oxadiazinetrione derivative of the polyisocyanate monomer is, for example, a reaction product of the above-described polyisocyanate monomer and a carbon dioxide gas.

The carbodiimide derivative of the polyisocyanate monomer is, for example, a reaction product by a decarboxylation condensation reaction of the above-described polyisocyanate monomer.

The uretonimine derivative of the polyisocyanate monomer is, for example, a reaction product of the above-described carbodiimide derivative and the above-described polyisocyanate monomer.

A polyisocyanate derivative derived from an aliphatic polyisocyanate monomer is an aliphatic polyisocyanate derivative, and a polyisocyanate derivative derived from an araliphatic polyisocyanate monomer is an araliphatic polyisocyanate derivative.

These polyisocyanates may be used alone or in combination of two or more.

The polyisocyanate preferably includes a polyisocyanate derivative, and more preferably includes a polyfunctional polyisocyanate derivative having three or more isocyanate groups. Examples of the polyfunctional polyisocyanate derivative include an isocyanurate derivative of a polyisocyanate monomer and a trimethylolpropane adduct of a polyisocyanate monomer.

In addition, of the polyfunctional polyisocyanate derivatives, preferably, an isocyanurate derivative of a polyisocyanate monomer is used, more preferably, an isocyanurate derivative of an aliphatic polyisocyanate monomer is used, particularly preferably, an isocyanurate derivative of a chain aliphatic polyisocyanate monomer (aliphatic polyisocyanate monomer excluding an alicyclic polyisocyanate monomer) is used, more particularly preferably, an isocyanurate derivative of HDI is used.

When the polyisocyanate contains a polyisocyanate derivative (particularly, an isocyanurate derivative of HDI as a polyisocyante), it is possible to reliably improve a pot life of a polyurethane resin composition to be described later.

Further, the polyisocyanate preferably consists of an aliphatic polyisocyanate and/or an araliphatic polyisocyanate, and more preferably consists of an aliphatic polyisocyanate.

In addition, an average functionality of the isocyanate group in the polyisocyanate is, for example, 2 or more, preferably 2.5 or more, and for example, 4 or less, preferably 3.5 or less.

Further, the isocyanate group content (NCO%) in the polyisocyanate is, for example, 2% by mass or more, preferably 5% by mass or more, further more preferably 15% by mass or more, and for example, 40% by mass or less, preferably 30% by mass or less.

### (1-2) Polyoxyethylene Compound

The polyoxyethylene compound has at least three continuous oxyethylene groups (ethylene oxide groups) as a hydrophilic group, and an active hydrogen group (for example, a hydroxyl group, an amino group, and the like) capable of reacting with an isocyanate group. Examples of the polyoxyethylene compound include a polyoxyethylene group-containing polyol, a polyoxyethylene group-containing polyamine, a one end-capped polyoxyethylene glycol, and a one end-capped polyoxyethylene diamine.

Examples of the polyoxyethylene group-containing polyol include polyoxyethylene glycol, polyoxyethylene triol, random and/or block copolymers of ethylene oxide and propylene oxide (for example, polyoxypropylene polyoxyethylene copolymer diol or triol, polyoxypropylene polyoxyethylene block polymer diol or triol, pluronic-type polyoxypropylene glycol or triol obtained by addition polymerization of an ethylene oxide at the end of the polyoxypropylene glycol, and the like).

Further, an example of the polyoxyethylene group-containing polyol includes a polyoxyethylene side chain-containing polyol having two or more hydroxyl groups at its molecular end and having a polyoxyethylene group in its side chain. The polyoxyethylene side chain-containing polyol can be, for example, prepared by first subjecting a diisocyanate monomer (for example, the above-described aliphatic diisocyanate monomer and the like) and a one end-capped polyoxyethylene glycol (described later) to a urethanization reaction to synthesize a polyoxyethylene chain-containing monoisocyanate, and next, subjecting a polyoxyethylene chain-containing monoisocyanate and a dialkanolamine (dialkanolamine of C1 to C20) to a ureanization reaction.

Further, an example of the polyoxyethylene side chain-containing polyol includes a polyoxyethylene side chain-containing polyol obtained by adding a one end-capped polyoxyethylene glycol (described later) to one hydroxyl group of a trihydric alcohol such as trimethylolpropane.

Examples of the polyoxyethylene group-containing polyamine include polyoxyalkylene ether diamines such as polyoxyethylene ether diamine.

An example of the one end-capped polyoxyethylene glycol includes an alkoxy polyoxyethylene glycol (poly(oxyethylene) alkyl ether) having one end capped with an alkyl group having 1 to 20 carbon atoms, and specifically, examples thereof include methoxy polyoxyethylene glycol (poly(oxyethylene) methyl ether) and ethoxy polyoxyethylene glycol (poly(oxyethylene) ethyl ether).

An example of the one end-capped polyoxyethylene diamine includes a polyoxyethylene diamine having one end capped with an alkoxy group having 1 to 20 carbon atoms.

A number average molecular weight of the polyoxyethylene compound is 400 or more and 800 or less. The number average molecular weight of the polyoxyethylene compound can be measured by gel permeation chromatography.

When the number average molecular weight of the polyoxyethylene compound is the above-described lower limit or more, it is possible to further more reliably improve the pot life of the polyurethane resin composition to be described later. When the number average molecular weight of the polyoxyethylene compound is the above-described upper limit or less, it is possible to reliably improve the solvent resistance of the polyurethane resin to be described later.

These polyoxyethylene compounds may be used alone or in combination of two or more.

The polyoxyethylene compound preferably includes a polyoxyethylene group-containing polyol, and/or a one end-capped polyoxcyethylene glycol, more preferably includes a one end-capped polyoxyethylene glycol, particularly preferably includes an alkoxypolyoxyethylene glycol (poly(oxyethylene) alkyl ether), and particularly preferably includes a methoxypolyoxyethylene glycol.

### (1-3) Preparation of Hydrophilic Group-Containing Polyisocyanate

Next, the preparation of the hydrophilic group-containing polyisocyanate is described.

The hydrophilic group-containing polyisocyanate is a reaction product of the above-described polyisocyanate and the above-described polyoxyethylene compound.

In order to prepare the hydrophilic group-containing polyisocyanate, the above-described polyisocyanate and the above-described polyoxyethylene compound are reacted at a ratio at which a free isocyanate group remains.

An equivalent ratio (active hydrogen group/ NCO) of an active hydrogen group of the polyoxyethylene compound to a free isocyanate group of the polyisocyanate is, for example, 0.01 or more, preferably 0.05 or more, and for example, 0.30 or less, preferably 0.20 or less.

A mixing ratio of the polyoxyethylene compound is, for example, 1.0 part by mass or more, preferably 2.0 parts by mass or more, further more preferably 10 parts by mass or more, particularly preferably 15 parts by mass or more, and for example, 70 parts by mass or less, preferably 60 parts by mass or less, more preferably 50 parts by mass or less, further more preferably 40 parts by mass or less, particularly preferably 30 parts by mass or less with respect to 100 parts by mass of the polyisocyanate.

Further, the reaction of the polyisocyanate with the polyoxyethylene compound is carried out, for example, in an atmosphere of an inert gas (for example, nitrogen gas, argon gas, and the like) under a solvent-free state.

A reaction temperature is, for example, 50°C or more, preferably 70°C or more, and for example, 150°C or less, preferably 110°C or less. The reaction pressure is, for example, the atmospheric pressure. The reaction time is, for example, 0.5 hours or more, preferably one hour or more, and for example, 120 hours or less, preferably 72 hours or less.

The completion of the reaction can be, for example, judged by no change in an amount of isocyanate measured by a titration method.

The polyisocyanate and the polyoxyethylene compound can be also reacted under an organic solvent to be described later.

Thus, the isocyanate group of the polyisocyanate and the active hydrogen group of the polyoxyethylene compound react with each other to prepare a hydrophilic group-containing polyisocyanate in which two or more free isocyanate groups remain.

An average functionality of the free isocyanate group in the hydrophilic group-containing polyisocyanate is, for example, 2 or more, preferably 2.2 or more, and for example, 4.0 or less, preferably 3.5 or less.

The isocyanate group concentration (in terms of solid content) in the hydrophilic group-containing polyisocyanate is, for example, 5% by mass or more, preferably 7% by mass or more, and for example, 30% by mass or less, preferably 25% by mass or less, further more preferably 20% by mass or less.

The oxyethylene group content (in terms of solid content) in the hydrophilic group-containing polyisocyanate is 1.0% by mass or more, preferably 2.0% by mass or more, more preferably 2.5% by mass or more, further more preferably 4.0% by mass or more, particularly preferably 5.0% by mass or more, still more preferably 10% by mass or more, more particularly preferably 13% by mass or more, most preferably 15% by mass or more, and 35% by mass or less, preferably 30% by mass or less, more preferably 27% by mass or less, further more preferably 25% by mass or less, particularly preferably 22% by mass or less. The oxyethylene group content in the hydrophilic group-containing polyisocyanate can be calculated in conformity with the method described in Examples to be described later.

When the oxyethylene group content in the hydrophilic group-containing polyisocyanate is the above-described lower limit or more, it is possible to further more reliably improve the pot life of the polyurethane resin composition to be described later, while imparting water dispersibility to the blocked isocyanate. When the oxyethylene group content in the hydrophilic group-containing polyisocyanate is the above-described upper limit or less, it is possible to further more reliably improve the solvent resistance of the polyurethane resin to be described later. In particular, when the oxyethylene group content in the hydrophilic group-containing polyisocyanate is 13% by mass or more, the blocked isocyanate can be self-emulsified in the polyurethane resin composition to be described later without separately adding an emulsifier.

Further, when the oxyethylene group content in the hydrophilic group-containing polyisocyanate is the above-described upper limit or less, it is possible to reliably improve the chipping resistance of a multilayer film 1 to be described later.

### (2) Blocking Agent

A blocking agent has an active group capable of reacting with an isocyanate group, and reacts with a free isocyanate group of the above-described polyisocyanate to form a latent isocyanate group. That is, the blocked isocyanate includes a latent isocyanate group which is blocked by a blocking agent.

The blocking agent includes a piperidone-based compound shown by the following general formula (1). 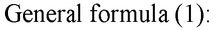 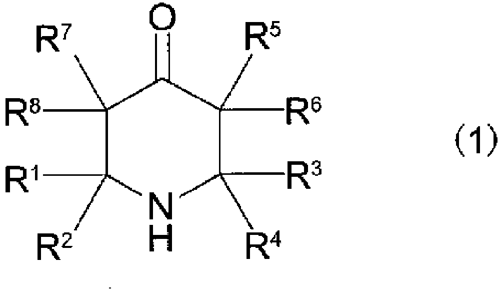 (In general formula (1), each of R¹ to R⁴ represents an alkyl group having 1 to 4 carbon atoms. R¹ to R⁴ may be the same or different from each other. Each of R⁵ to R⁸ represents an alkyl group having 1 to 4 carbon atoms or a hydrogen atom. R⁵ to R⁸ may be the same or different from each other).

The piperidone-based compound shown by the above-described general formula (1) has a piperidone skeleton (piperidine-4-one) containing a secondary amino group. In general formula (1), each of R¹ to R⁴ represents an alkyl group. In other words, in the piperidone-based compound, both of the two carbon atoms directly bonded to a nitrogen atom of the secondary amino group are tertiary carbon atoms.

In general formula (1), examples of the alkyl group represented as R¹ to R⁴ include straight-chain alkyl groups having 1 to 4 carbon atoms (methyl group, ethyl group, propyl group, butyl group) and branched alkyl groups having carbon atoms of 1 to 4 (isopropyl group, isobutyl group, sec-butyl group, tert-butyl group), and preferably, a straight-chain alkyl group is used, further more preferably, a methyl group is used. That is, in general formula (1), each of R¹ to R⁴ preferably represents a methyl group.

R¹ to R⁴ in general formula (1) may be the same or different from each other, and are preferably the same.

In general formula (1), examples of the alkyl group represented as R⁵ to R⁸ include the above-described straight-chain alkyl groups having 1 to 4 carbon atoms, and the above-described branched alkyl groups having 1 to 4 carbon atoms. In general formula (1), R⁵ to R⁸ preferably represents a hydrogen atom.

R⁵ to R⁸ in general formula (1) may be the same or different from each other, and are preferably the same.

Specifically, an example of the piperidone-based compound includes a 2,2,6,6-tetramethylpiperidine-4-one (in general formula (1), all of R¹ to R⁴ are methyl groups, and all of R⁵ to R⁸ are hydrogen atoms).

These piperidone-based compounds may be used alone or in combination of two or more.

The blocking agent preferably consists of a piperidone-based compound shown by the above-described general formula (1).

A dissociation temperature of the blocking agent is, for example, 120°C or less, preferably 100°C or less, more preferably 90°C or less, particularly preferably 80°C or less, and for example, 60°C or more. The dissociation temperature of the blocking agent can be measured by the following method.

The blocked isocyanate is applied to a silicon wafer, and the temperature at which the isocyanate group regenerates is observed by IR measurement while heating. When the regenerated isocyanate group cannot be observed, the dissociation temperature of the blocking agent can be measured by mixing with a known polyol, applying the obtained mixture to a silicon wafer, and observing the temperature at which the hydroxyl group of the polyol reacts by IR measurement while heating.

In addition, the blocking agent may also contain another blocking agent (active group-containing compound) in addition to the above-described piperidone-based compound.

Examples of the other blocking agent include guanidine-based compounds, imidazole-based compounds, alcohol-based compounds, phenolic compounds, active methylene-based compounds, imine-based compounds, oxime-based compounds, carbamic acid-based compounds, urea-based compounds, acid amide-based (lactam-based) compounds, acid imide-based compounds, triazole-based compounds, pyrazole-based compounds, mercaptan-based compounds, bisulfite, imidazoline-based compounds, pyrimidine-based compounds, and amine compounds excluding the above-described piperidone-based compounds. These other blocking agents may be used alone or in combination of two or more.

A content ratio of the other blocking agent in the blocking agent is, for example, 0% by mass or more, for example, 30% by mass or more, and preferably 20% by mass or less.

### (3) Preparation of Blocked Isocyanate

Next, the preparation of the blocked isocyanate is described.

In order to prepare the blocked isocyanate, the above-described hydrophilic group-containing polyisocyanate is reacted with the above-described blocking agent.

An equivalent ratio (active hydrogen group/ isocyanate group) of the active hydrogen group (secondary amino group) in the blocking agent to the isocyanate group in the hydrophilic group-containing polyisocyanate is, for example, 0.2 or more, preferably 0.4 or more, more preferably 0.5 or more, further more preferably 0.8 or more, particularly preferably 0.9 or more, still more preferably 1.0 or more, and for example, 2.0 or less, preferably 1.5 or less, further more preferably 1.2 or less.

When the equivalent ratio of the active hydrogen group (secondary amino group) to the isocyanate group is the above-described lower limit or more, it is possible to further more stably improve the pot life of the polyurethane resin composition to be described later. When the equivalent ratio of the active hydrogen group (secondary amino group) to the isocyanate group is the above-described upper limit or less, it is possible to further more stably improve the solvent resistance of the polyurethane resin to be described later.

Further, the reaction of the hydrophilic group-containing polyisocyanate with the blocking agent is, for example, carried out in an atmosphere of an inert gas (for example, nitrogen gas, argon gas, and the like) in the presence of a solvent. Examples of the solvent include an organic solvent and a known plasticizer, and preferably, an organic solvent is used.

Examples of the organic solvent include ketones (for example, acetone, methyl ethyl ketone, methyl isobutyl ketone, cyclohexanone, and the like), nitriles (for example, acetonitrile and the like), alkyl esters (for example, methyl acetate, ethyl acetate, butyl acetate, isobutyl acetate, and the like), aliphatic hydrocarbons (for example, n-hexane, n-heptane, octane, and the like), alicyclic hydrocarbons (for example, cyclohexane, methylcyclohexane, and the like), aromatic hydrocarbons (for example, toluene, xylene, ethylbenzene, and the like), glycol ether esters (for example, methyl cellosolve acetate, ethyl cellosolve acetate, methyl carbitol acetate, ethyl carbitol acetate, ethylene glycol monoethyl ether acetate, propylene glycol monomethyl ether acetate, 3-methyl-3-methoxybutyl acetate, ethyl-3-ethoxypropionate, and the like), ethers (for example, diethyl ether, tetrahydrofuran, dioxane, 1,2-dimethoxyethane, diethylene glycol dimethyl ether, diethylene glycol diethyl ether, diethylene glycol ethyl methyl ether, dipropylene glycol dimethyl ether, dipropylene glycol diethyl ether, and the like), halogenated aliphatic hydrocarbons (for example, methyl chloride, methylene chloride, chloroform, carbon tetrachloride, methyl bromide, methylene iodide, dichloroethane, and the like), and polar aprotones (for example, N-methylpyrrolidone, dimethylformamide, N,N'-dimethylacetamide, dimethyl sulfoxide, hexamethylphosphonylamide, and the like).

These organic solvents may be used alone or in combination of two or more. The organic solvent preferably includes glycol ether esters, more preferably consists of glycol ether esters, and particularly preferably consists of propylene glycol monomethyl ether acetate.

An addition ratio of the organic solvent is, for example, 1 part by mass or more, preferably 10 parts by mass or more, and for example, 100 parts by mass or less, preferably 80 parts by mass or less with respect to 100 parts by mass of the hydrophilic group-containing polyisocyanate.

A reaction temperature is, for example, 0°C or more, preferably 20°C or more, and for example, 80°C or less, preferably 60°C or less. The reaction pressure is, for example, the atmospheric pressure. The reaction time is, for example, 0.5 hours or more, preferably 1.0 hour or more, and for example, 24 hours or less, preferably 12 hours or less.

Thus, a latent isocyanate group blocked by the blocking agent is produced.

In addition, when the blocking agent has the above-described piperidone-based compound and another blocking agent in combination, the piperidone-based compound and the other blocking agent may be simultaneously reacted with the hydrophilic group-containing polyisocyanate, or the piperidone-based compound and the other blocking agent may be sequentially reacted with the hydrophilic group-containing polyisocyanate.

Further, the completion of the reaction can be judged by, for example, adopting an infrared spectroscopic analysis method and the like, and confirming the disappearance or decrease of the isocyanate group.

Also, the above-described reaction can be also carried out under a solvent-free state.

Thus, the blocked isocyanate in which the isocyanate group of the hydrophilic group-containing polyisocyanate is blocked by the blocking agent is prepared.

### (4) Polyurethane Resin Composition

The blocked isocyanate can be, for example, used as a known resin raw material such as a polyurethane resin raw material, and is preferably suitably used as a two liquid-type polyurethane resin raw material.

The two liquid-type polyurethane resin raw material includes an A agent containing the above-described blocked isocyanate as a polyisocyanate component, and a B agent as a polyol component. Then, the two liquid-type polyurethane resin raw material is used immediately before its use by blending the A agent (curing agent) and the B agent (main agent) which are prepared separately.

In the polyisocyanate component, when the oxyethylene group content of the above-described hydrophilic group-containing polyisocyanate is 13% by mass or more, the blocked isocyanate is self-emulsifiable in water. In this case, the polyisocyanate component does not need to contain an emulsifier in addition to the blocked isocyanate.

On the other hand, when the oxyethylene group content of the above-described hydrophilic group-containing polyisocyanate is below 13% by mass, the blocked isocyanate is not self-emulsifiable in water. In this case, the polyisocyanate component contains an emulsifier in addition to the blocked isocyanate.

Examples of the emulsifier include polyoxyethylene alkyl ether-based emulsifiers, polyoxyethylene lauryl ether-based emulsifiers, polyoxyethylene octyl dodecyl ether-based emulsifiers, and polyoxyethylene polyoxypropylene glycol-based emulsifiers, and preferably, a polyoxyethylene alkyl ether-based emulsifier is used.

An addition ratio of the emulsifier is, for example, 5% by mass or more, preferably 10% by mass or more, and for example, 30% by mass or less, preferably 20% by mass or less with respect to the total sum of the blocked isocyanate and the emulsifier.

Also, the polyisocyanate component may further contain a solvent which disperses or dissolves the blocked isocyanate. Examples of the solvent include water and the above-described organic solvent. Therefore, as described above, when the blocked isocyanate is prepared in the presence of an organic solvent, a reaction liquid containing the blocked isocyanate and the organic solvent can be also used as the polyisocyanate component (A agent) as it is.

A content ratio (solid content concentration) of the blocked isocyanate in the polyisocyanate component is appropriately changed, and is, for example, 1% by mass or more, preferably 5% by mass or more, more preferably 20% by mass or more, particularly preferably 50% by mass or more, and for example, 90% by mass or less, preferably 80% by mass or less.

The polyol component contains, for example, a macropolyol, and is preferably prepared by dispersing the macropolyol in water. In other words, the polyol component contains the macropolyol and water.

The macropolyol is a high molecular weight polyol having a number average molecular weight of 250 or more, preferably 400 or more, and for example, 10000 or less.

Examples of the macropolyol include polyester polyols, vegetable oil-based polyester polyols, polycaprolactone polyols, polyether polyosl, polycarbonate polyols, acrylic polyols, and urethane-modified polyols.

These macropolyols may be used alone or in combination of two or more. Of the macropolyols, preferably, an acrylic polyol is used.

Further, if necessary, an additive may be appropriately blended into any one of or both the polyisocyanate component and the polyol compound. Examples of the additive include catalysts, epoxy resins, coatability improvers, leveling agents, defoaming agents, stabilizers such as antioxidant and ultraviolet absorber, thickeners, anti-sedimentation agents, plasticizers, surfactants, pigments, fillers, organic or inorganic fine particles, and antifungal agents. A mixing amount of the additive is appropriately determined in accordance with its purpose and use.

The polyisocyanate component (A agent) and the polyol component (B agent) are blended and stirred at the time of its use to prepare a polyurethane resin composition.

As a mixing ratio of the polyisocyanate component to the polyol component, for example, an equivalent ratio (latent isocyanate group/ hydroxyl group) of the latent isocyanate group of the blocked isocyanate to the hydroxyl group of the macropolyol is, for example, 0.1 or more, preferably 0.5 or more, more preferably 0.8 or more, and for example, 5 or less, preferably 3 or less, further more preferably 1.2 or less.

Then, a mixture of the polyisocyanate component and the polyol component is applied to an object to be applied by a known application method (for example, spray coating, dip coating, spin coating, rotational atomization coating, curtain coating, and the like) and dried to form a coating film. Thereafter, the coating film is cured by heating, and if necessary, aged.

A heating temperature is, for example, 120°C or less, preferably 100°C or less, more preferably 90°C or less, and for example, 60°C or more.

The resulting mixture can be also electrostatically applied, if necessary, and furthermore, baked after application. A baking method is not particularly limited, and a known method such as infrared heating, hot air heating, high-frequency heating, and the like is used.

Thus, the blocking agent is dissociated from the blocked isocyanate, and the isocyanate group of the hydrophilic group-containing polyisocyanate and the hydroxyl group of the macropolyol are reacted.

As described above, a coating film (cured coating film, polyurethane resin) is formed from the two liquid-type polyurethane resin raw material containing the blocked isocyanate.

Examples of the use of the two liquid-type polyurethane resin raw material include coating materials, adhesives, fibers, leather, waterproof materials, binders, and foams, and preferably, a coating material and an adhesive are used. In other words, the two liquid-type polyurethane resin raw material is preferably used as a raw material for a polyurethane coating material and a polyurethane adhesive raw material, and the blocked isocyanate is preferably used as a blocked isocyanate for a coating material and a blocked isocyanate for an adhesive.

### <Function and Effect>

In the blocked isocyanate, the oxyethylene group content in the hydrophilic group-containing polyisocyanate is within the above-described range, the polyisocyanate includes the aliphatic polyisocyanate and/or the araliphatic polyisocyanate, and the blocking agent contains the piperidone-based compound shown by the above-described general formula (1).

Therefore, it is possible to improve the pot life of the polyurethane resin composition containing the blocked isocyanate, while ensuring the water dispersibility of the blocked isocyanate, and further, it is possible to impart excellent solvent resistance to the polyurethane resin formed from the polyurethane resin composition.

### <Multilayer Film>

The above-described blocked isocyanate can be preferably used in a polyurethane coating material and a polyurethane adhesive, more preferably used in the polyurethane coating material, and further more preferably used in an intermediate coating material.

Hereinafter, the multilayer film 1 including an intermediate coating layer 5 formed from an intermediate coating material containing the above-described blocked isocyanate is described.

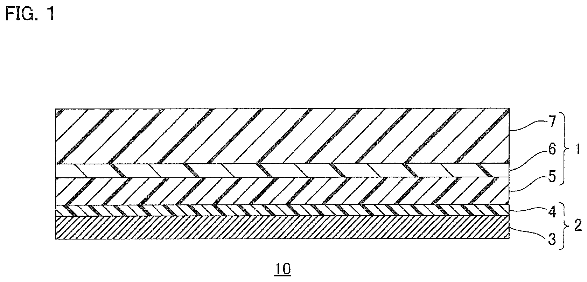

In FIG. 1, a coating panel 10 includes an object 2 to be applied, and the multilayer film 1 disposed on the object 2 to be applied.

The object 2 to be applied includes a substrate 3.

Examples of the substrate 3 include metal plates and resin plates.

In the metal plate, examples of the metal include iron, steel, stainless steel, aluminum, copper, zinc, and tin. These metals may be used alone or in combination of two or more.

In the resin plate, examples of the resin include polyolefin resins (polyethylene resins, polypropylene resins, and the like), ethylene-vinyl acetate copolymer (EVA) resins, acrylonitrile-butadiene-styrene (ABS) resins, vinyl chloride resins, polyester resins, polycarbonate resins, acrylic resins, polyamide resins, acetal resins, phenol resins, fluororesins, melamine resins, urethane resins, epoxy resins, polyphenylene oxide resins, and styrol resins. These resins may be used alone or in combination of two or more.

These substrates 3 may be used alone or in combination of two or more.

In other words, the substrate 3 may be a metal plate, a resin plate, and further, a composite plate including a metal and a resin. Preferably, a metal plate is used as the substrate 3.

Further, if necessary, the substrate 3 may be subjected to surface treatment such as chemical conversion treatment (zinc phosphate chemical conversion treatment, zirconium chemical conversion treatment, chromium oxidation conversion treatment, and the like). Furthermore, if necessary, electrodeposition coating such as cationic electrodeposition coating treatment and anionic electrodeposition coating treatment may be applied to the surface of the substrate 3.

The substrate 3 is preferably subjected to chemical conversion treatment and electrodeposition coating. That is, preferably, an electrodeposition layer 4 made of an electrodeposition coating material is formed on the surface of the substrate 3.

In other words, the object 2 to be applied preferably includes the substrate 3 and the electrodeposition layer 4. More specifically, examples of the object 2 to be applied include an external board of vehicles such as automobiles and trains, an external board of airframes for aircrafts, and an external board for industrial machines, and preferably, an external board of vehicles is used.

The multilayer film 1 is a film body of a multilayer structure formed on the object 2 to be applied (the electrodeposition layer 4), and includes the intermediate coating layer 5, a base layer 6 disposed on the intermediate coating layer 5, and a clear layer 7 disposed on the base layer 6.

In the multilayer film 1, the intermediate coating layer 5 is a thermosetting product (intermediate coating resin cured product) of an intermediate coating material to be described later, the base layer 6 is a thermosetting product (base resin cured product) of a base coating material to be described later, and the clear layer 7 is a thermosetting product (clear resin cured product) of a clear coating material to be described later.

The multilayer film 1 is produced by a method shown below, for example, by a 3 coat 1 bake method.

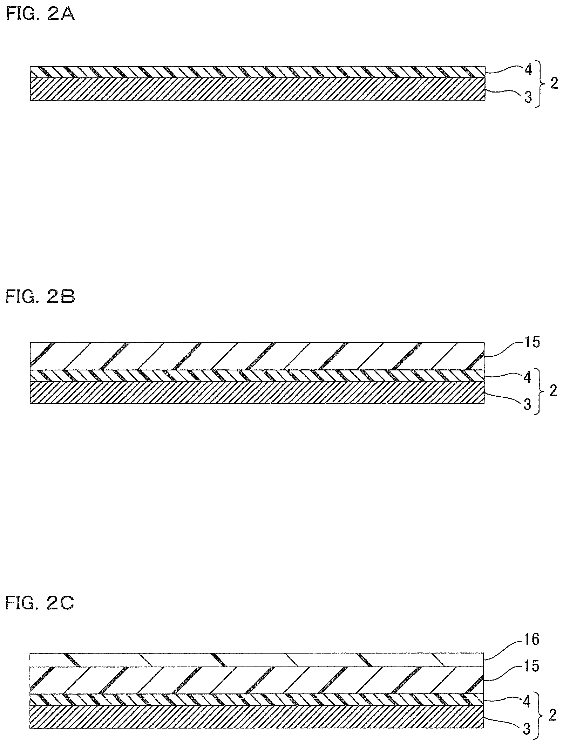

That is, in this method, first, as shown in FIG. 2A, the object 2 to be applied including the substrate 3 (and the electrodeposition layer 4 if necessary) is prepared (preparation step).

### (1) Intermediate Coating Step

Then, in this method, as shown in FIG. 2B, an intermediate coating material is applied to the surface (surface of the electrodeposition layer 4, when provided with the electrodeposition layer 4) of the object 2 to be applied to form an intermediate coating film 15 (intermediate coating step).

The intermediate coating material is a resin composition (intermediate coating resin composition) containing an intermediate coating main agent having a hydroxyl group and an intermediate coating curing agent containing the above-described blocked isocyanate.

### (1-1) Intermediate Coating Main Agent

Examples of the intermediate coating main agent having a hydroxyl group include an aqueous resin having a hydroxyl group and an oil-based resin having a hydroxyl group.

An example of the aqueous resin having a hydroxyl group includes a hydrophilic polymer having a hydroxyl group, and specifically, examples thereof include a hydrophilic polyester resin having a hydroxyl group, a hydrophilic polyamide resin having a hydroxyl group, a hydrophilic polyurethane resin having a hydroxyl group (hydrophilic polyurethane polyol), a hydrophilic acrylic resin having a hydroxyl group (hydrophilic acrylic polyol), and a hydrophilic polyolefin resin having a hydroxyl group (for example, polypropylene, polyethylene, polypropylene-polyethylene (random/ block) copolymer, and another polyolefin having 4 or more carbon atoms of a repeating unit). These aqueous resins having a hydroxyl group may be used alone or in combination of two or more.

As the aqueous resin having a hydroxyl group, preferably, a hydrophilic polyurethane resin having a hydroxyl group and a hydrophilic acrylic resin having a hydroxyl group are used.

An example of the oil-based resin having a hydroxyl group includes a hydrophobic polymer having a hydroxyl group, and specifically, examples thereof include a hydrophobic polyester resin having a hydroxyl group, a hydrophobic polyamide resin having a hydroxyl group, a hydrophobic polyurethane resin having a hydroxyl group (hydrophobic polyurethane polyol), a hydrophobic acrylic resin having a hydroxyl group (hydrophobic acrylic polyol), and a hydrophobic polyolefin resin having a hydroxyl group (for example, polypropylene, polyethylene, polypropylene-polyethylene (random/ block) copolymer, and another polyolefin having 4 or more carbon atoms of a repeating unit). These oil-based resins having a hydroxyl group may be used alone or in combination of two or more.

As the oil-based resin having a hydroxyl group, preferably, a hydrophobic polyurethane resin having a hydroxyl group and a hydrophobic acrylic resin having a hydroxyl group are used.

These intermediate coating main agents may be used alone or in combination of two or more.

As the intermediate coating main agent, preferably, an aqueous resin having a hydroxyl group is used.

Further, as the intermediate coating main agent, preferably, an acrylic resin having a hydroxyl group (hydrophilic acrylic resin and hydrophobic acrylic resin), and a polyurethane resin having a hydroxyl group (hydrophilic polyurethane resin and hydrophobic polyurethane resin) are used, more specifically, an acrylic polyol having a hydroxyl group (hydrophilic acrylic polyol and hydrophobic acrylic polyol), and a polyurethane polyol having a hydroxyl group (hydrophilic polyurethane polyol and hydrophobic polyurethane polyol) are used.

Further, as the intermediate coating main agent, from the viewpoint of chipping resistance, more preferably, a combination of an acrylic resin having a hydroxyl group (more preferably, an acrylic polyol (hereinafter, the same)) and a polyurethane resin having a hydroxyl group (more preferably, a polyurethane polyol (hereinafter, the same)) is used.

When an acrylic resin having a hydroxyl group and a polyurethane resin having a hydroxyl group are used in combination, preferably, their hydrophilicity and/or hydrophobicity are unified. In other words, when the hydrophilic acrylic resin is used, the hydrophilic polyurethane resin is used. In addition, when the hydrophobic acrylic resin is used, the hydrophobic polyurethane resin is used.

As the intermediate coating main agent, particularly preferably, a combination of a hydrophilic acrylic resin having a hydroxyl group and a hydrophilic polyurethane resin having a hydroxyl group is used.

In addition, when an acrylic resin having a hydroxyl group and a polyurethane resin having a hydroxyl group are used in combination, as a combination ratio of these, from the viewpoint of chipping resistance, in terms of solid content, a ratio of the acrylic resin is, for example, 50% by mass or more, preferably 55% by mass or more, more preferably 60% by mass or more, further more preferably 65% by mass or more, particularly preferably 70% by mass or more, and for example, 99% by mass or less, preferably 90% by mass or less, more preferably 85% by mass or less, further more preferably 80% by mass or less with respect to the total amount of the acrylic resin and the polyurethane resin. Further, a ratio of the polyurethane resin is, for example, 1% by mass or more, preferably 10% by mass or more, more preferably 15% by mass or more, further more preferably 20% by mass or more, and for example, 50% by mass or less, preferably 45% by mass or less, more preferably 40% by mass or less, further more preferably 35% by mass or less, particularly preferably 30% by mass or less with respect to the total amount of the acrylic resin and the polyurethane resin.

When the combination ratio of the acrylic resin having a hydroxyl group to the polyurethane resin having a hydroxyl group is within the above-described range, it is possible to achieve both the mechanical strength and the chipping resistance.

### (1-2) Intermediate Coating Curing Agent

The intermediate coating curing agent contains the above-described blocked isocyanate. More specifically, as the details are described later, the intermediate coating curing agent is prepared as a composition containing an isocyanate composition containing the above-described blocked isocyanate and water and/or an organic solvent. The isocyanate composition contains the above-described blocked isocyanate as a main component (for example, at a ratio of 90% by mass or more with respect to the isocyanate composition).

The hydrophilic group-containing polyisocyanate of the blocked isocyanate used in the intermediate coating curing agent is, for example, prepared by reacting the above-described polyisocyanate with the above-described polyoxyethylene compound at the equivalent ratio and the reaction conditions described above in the presence of the above-described organic solvent.

The organic solvent preferably includes ethers, more preferably consists of ethers, and further more preferably consists of diethylene glycol ethyl methyl ether.

An addition ratio of the organic solvent is, for example, 1 part by mass or more, preferably 10 parts by mass or more, and for example, 100 parts by mass or less, preferably 50 parts by mass or less with respect to 100 parts by mass of the polyisocyanate.

It is also possible to react the polyisocyanate with the polyoxyethylene compound under a solvent-free state.

In addition, in the reaction of the polyisocyanate and the polyoxyethylene compound described above, a high molecular weight polyol may be also further added.

The high molecular weight polyol has a number average molecular weight of, for example, 400 or more, and specifically, examples thereof include polyoxypropylene polyols (for example, polypropylene glycols, polypropylene polyethylene glycols (random or block copolymers of polypropylene oxide and polyethylene oxide), polyoxybutylene polyols (for example, polytetramethylene ether glycols and the like), polyester polyols (for example, alkylene (ethylene and/or butylene) adipates, polycaprolactone polyols, and the like), and polycarbonate polyols (for example, polycarbonate diols and the like). These high molecular weight polyols may be used alone or in combination of two or more.

Of the high molecular weight polyols, preferably, a polycarbonate polyol is used, more preferably, a polycarbonate diol is used.

When a high molecular weight polyol is added, an addition ratio of the high molecular weight polyol is, for example, 1 part by mass or more, preferably 10 parts by mass or more, and for example, 50 parts by mass or less, preferably 30 parts by mass or less with respect to 100 parts by mass of the polyisocyanate.

Then, an isocyanate composition containing a blocked isocyanate as a main component is prepared by reacting the above-described hydrophilic group-containing polyisocyanate with the above-described blocking agent at the equivalent ratio and the reaction conditions described above.

The intermediate coating curing agent is not particularly limited as long as it contains an isocyanate composition, and is, for example, prepared as a water dispersion liquid in which an isocyanate composition is dispersed in water (hereinafter, referred to as a water dispersion composition) or a solution in which an isocyanate composition is dissolved in an organic solvent (hereinafter, referred to as a solution composition).

The water dispersion composition contains the isocyanate composition and water.

A method of dispersing the isocyanate composition in water is not particularly limited, and examples thereof include a method of adding water to the isocyanate composition and stirring the mixture, and a method of adding the isocyanate composition to water and stirring the mixture. Preferably, water is added to the isocyanate composition.

A ratio of the isocyanate composition to water is not particularly limited, and the concentration (that is, the solid content concentration) of the isocyanate composition (resin component) in the water dispersion composition is, for example, 5% by mass or more, preferably 10% by mass or more, more preferably 50% by mass or more, and for example, 90% by mass or less, preferably 80% by mass or less.

When the intermediate coating curing agent is the water dispersion composition, it is possible to improve the miscibility with an aqueous resin (intermediate coating main agent), and to obtain a cured product having excellent appearance and excellent chemical resistance. Further, since the solution composition contains the above-described isocyanate composition, it has excellent thermal stability.

The solution composition contains the isocyanate composition and the organic solvent.

Examples of the organic solvent include the above-described organic solvent, and preferably, ethers are used, more preferably, diethylene glycol ethyl methyl ether is used.

In addition, a solvent used in the preparation of the isocyanate composition may be also used as an organic solvent of the solution composition. For example, the solvent used after the reaction step can be also used as the organic solvent of the solution composition as it is without distillation.

A method of dissolving the isocyanate composition in the organic solvent is not particularly limited, and examples thereof include a method of adding an organic solvent to an isocyanate composition and stirring the mixture, and a method of adding an isocyanate composition to an organic solvent and stirring the mixture. Preferably, the organic solvent is added to the isocyanate composition.

A ratio of the isocyanate composition to the organic solvent is not particularly limited, and the concentration (that is, the solid content concentration) of the isocyanate composition (resin component) in the solution composition is, for example, 5% by mass or more, preferably 10% by mass or more, more preferably 50% by mass or more, and for example, 90% by mass or less, preferably 80% by mass or less.

When the intermediate coating curing agent is the solution composition, it is possible to improve the miscibility with an oil-based resin (intermediate coating main agent), and to obtain a cured product having excellent appearance and excellent chemical resistance. Further, the solution composition has excellent thermal stability.

These intermediate coating curing agents may be used alone or in combination of two or more.

As the intermediate coating curing agent, preferably, a water dispersion composition is used.

Further, as the combination of the intermediate coating main agent and the intermediate coating curing agent, preferably, a combination in which the intermediate coating main agent is an aqueous resin and the intermediate coating curing agent is a water dispersion composition is used. Also, preferably, a combination in which the intermediate coating main agent is an oil-based resin and the intermediate coating curing agent is a solution composition is used.

As the intermediate coating material (resin composition), preferably, a combination of an aqueous intermediate coating main agent and a water dispersion composition is used from the viewpoint of reducing an organic solvent and protecting the global environment.

As a content ratio of the intermediate coating main agent to the intermediate coating curing agent, a ratio of the intermediate coating main agent is, for example, 10 parts by mass or more, preferably 30 parts by mass or more, and for example, 99.5 parts by mass or less, preferably 95.0 parts by mass or less with respect to 100 parts by mass of the total amount of these. Further, a ratio of the intermediate coating curing agent is, for example, 0.5 parts by mass or more, preferably 5 parts by mass or more, and for example, 90 parts by mass or less, preferably 70 parts by mass or less with respect to 100 parts by mass of the total amount of these.

Further, a mole ratio of the latent isocyanate group in the intermediate coating curing agent to the hydroxyl group in the intermediate coating main agent is 0.2 or more, preferably 0.5 or more, more preferably 0.8 or more, and 1.5 or less, preferably 1.2 or less.

When the mole ratio of the latent isocyanate group in the intermediate coating curing agent to the hydroxyl group in the intermediate coating main agent is the above-described lower limit or more, it is possible to improve the weather resistance and the chipping resistance of the multilayer film 1. When the mole ratio of the latent isocyanate group in the intermediate coating curing agent to the hydroxyl group in the intermediate coating main agent is the above-described upper limit or less, it is possible to improve the appearance of the multilayer film 1.

In addition, if necessary, an additive may be blended into any one of or both the intermediate coating main agent and the intermediate coating curing agent. Examples of the additive include epoxy resins, catalysts (urethanization catalysts and the like), coatability improvers, leveling agents, viscosity modifiers, defoaming agents, stabilizers such as antioxidant and ultraviolet absorber, plasticizers, surfactants, pigments, solvents, surface modifiers, dispersants, fillers, organic or inorganic fine particles, antifungal agents, and silane coupling agents. A mixing amount of the additive is appropriately determined in accordance with its purpose and use.

The two or more additives described above may be mixed in advance and prepared as a mixed additive. An example of the mixed additive includes pigment paste in which a pigment, a dispersant, and a solvent are mixed in advance.

Further, as the intermediate coating main agent, the aqueous resin having a hydroxyl group described above and/or the oil-based resin having a hydroxyl group described above, and another resin (for example, a carboxyl group-containing polyurethane resin, a carboxyl group-containing acrylic resin, a carboxyl group-containing polyester resin, and the like) may be used in combination.

Further, as the intermediate coating curing agent, the above-described isocyanate composition and another curing agent (for example, an epoxy-based resin, a melamine resin, and the like) may be also used in combination.

The intermediate coating material is, for example, produced as a two liquid-type coating material including an intermediate coating curing agent and an intermediate coating main agent, or is produced as a one liquid-type coating material in which an intermediate coating curing agent and an intermediate coating main agent are mixed in advance.

A curing temperature of the intermediate coating material is, for example, 100°C or less, preferably 80°C or less, and for example, 60°C or more.

In addition, in the application of the intermediate coating material, for example, when the intermediate coating material is the two liquid-type, the intermediate coating main agent and the intermediate coating curing agent are mixed, and the obtained mixture is applied to the object 2 to be applied. Alternatively, when the intermediate coating material is the one liquid-type, the intermediate coating material is applied to the object 2 to be applied as it is.

An application method is not particularly limited, and a known application method such as brush coating, gravure coating method, reverse coating method, roll coating method, bar coating method, spray coating method, air knife coating method, and dipping method is used.

An application amount of the intermediate coating material is appropriately set in accordance with its purpose and use.

More specifically, a dry film thickness of the intermediate coating film 15 is, for example, 10 µm or more, preferably 15 µm or more, and for example, 50 µm or less, preferably 40 µm or less.

### (2) Base Step

Then, in this step, as shown in FIG. 2C, a base coating material is applied onto the above-described intermediate coating film 15 to form a base coating film 16 (base step).

The base coating material is a resin composition (base resin composition) containing at least a base main agent.

Examples of the base main agent include the above-described aqueous resin having a hydroxyl group and the above-described oil-based resin having a hydroxyl group. These base main agents may be used alone or in combination of two or more. As the base main agent, preferably, a hydrophilic resin having a hydroxyl group is used, and from the viewpoint of chipping resistance, preferably, an acrylic resin is used, more preferably, a hydrophilic acrylic resin is used.

Further, the base main agent preferably contains a polyurethane resin, and more preferably contains a hydrophilic polyurethane resin.

In other words, as the base main agent, more preferably, a combination of an acrylic resin and a polyurethane resin is used, more specifically, a combination of an acrylic polyol and a polyurethane polyol is used, further more preferably, a combination of a hydrophilic acrylic polyol and a hydrophilic polyurethane polyol is used, particularly preferably, a combination of a hydrophilic acrylic polyol of the same kind as the intermediate coating main agent and a hydrophilic polyurethane polyol of the same kind as the intermediate coating main agent is used.

When the base main agent contains an acrylic resin (more preferably, an acrylic polyol (hereinafter, the same)) and a polyurethane resin (more preferably, a polyurethane polyol (hereinafter, the same)), it is possible to improve the adhesive properties and the chipping resistance.

When the acrylic resin and the polyurethane resin are used in combination as the base main agent, as a combination ratio of these, in terms of solid content, a ratio of the acrylic resin is, for example, 50% by mass or more, preferably 55% by mass or more, more preferably 60% by mass or more, further more preferably 65% by mass or more, particularly preferably 70% by mass or more, and for example, 99% by mass or less, preferably 90% by mass or less, more preferably 85% by mass or less, further more preferably 80% by mass or less with respect to the total amount of the acrylic resin and the polyurethane resin. Further, a ratio of the polyurethane resin is, for example, 1% by mass or more, preferably 10% by mass or more, more preferably 15% by mass or more, further more preferably 20% by mass or more, and for example, 50% by mass or less, preferably 45% by mass or less, more preferably 40% by mass or less, further more preferably 35% by mass or less, particularly preferably 30% by mass or less with respect to the total amount of the acrylic resin and the polyurethane resin.

When the combination ratio of the acrylic resin to the polyurethane resin is within the above-described range, it is possible to achieve both the adhesive properties and the chipping resistance.

Further, since the base coating material is curable by a clear curing agent as described later, as long as the base main agent is contained, the curing agent may not be contained. And, if necessary, the base curing agent may be contained.

Examples of the base curing agent include epoxy curing agents, melamine curing agents, carbodiimide curing agents, aziridine curing agents, oxazoline curing agents, and isocyanate curing agents (polyisocyanate monomers, polyisocyanate derivatives, blocked isocyanates, and the like). These base curing agents may be used alone or in combination of two or more.

When the base coating material contains the base curing agent, it is possible to improve the mechanical strength of the base layer 6, and to improve the chipping resistance.

As described above, the base curing agent may also not be contained in the base coating material.

More specifically, for example, in a case where a clear curing agent is contained in a clear coating material (clear coating film 17) to be described later and the multilayer film 1 is formed by a 3 coat 1 bake method, even when the base coating material does not contain the base curing agent, the clear curing agent in the clear coating material (the clear coating film 17) penetrates into the base coating material (the base coating film 16) to cure the base coating film 16.

In addition, in a case where the clear curing agent is not contained in the clear coating material (the clear coating film 17) to be described later, or the multilayer film 1 is not formed by the 3 coat 1 bake method (for example, when formed by a 3 coat 3 bake method), preferably, a base curing agent is contained in the base coating material (the base coating film 16) so as to cure the base coating film 16. In addition, in order to improve the curability of the base coating film 16, the base curing agent may be also contained in the base coating material (the base coating film 16).

When the base coating material contains the base curing agent, a content ratio of the base main agent to the base curing agent is appropriately set in accordance with the kind of the base main agent and the kind of the base curing agent (the kind and the number of functional groups and the like).

For example, though depending on the kind of the base main agent and the kind of the base curing agent, an equivalent ratio of the functional group (isocyanate group and the like) in the base curing agent to the functional group (hydroxyl group and the like) in the base main agent is, for example, 0.8 or more, preferably 0.9 or more, and for example, 1.2 or less, preferably 1.1 or less.

Further, on a mass basis, for example, a ratio of the base main agent is, for example, 10 parts by mass or more, preferably 30 parts by mass or more, and for example, 99.5 parts by mass or less, preferably 95.0 parts by mass or less with respect to 100 parts by mass of the total amount of the base main agent and the base curing agent. Further, a ratio of the base curing agent is, for example, 0.5 parts by mass or more, preferably 5 parts by mass or more, and for example, 90 parts by mass or less, preferably 70 parts by mass or less with respect to 100 parts by mass of the total amount of the base main agent and the base curing agent.

In addition, in the base coating material, for example, if necessary, an additive may be blended into any one of or both the base main agent and the base curing agent. Examples of the additive include epoxy resins, catalysts (urethanization catalysts and the like), coatability improvers, leveling agents, viscosity modifiers, defoaming agents, stabilizers such as antioxidant and ultraviolet absorber, plasticizers, surfactants, pigments, solvents, surface modifiers, dispersants, fillers, organic or inorganic fine particles, antifungal agents, and silane coupling agents. A mixing amount of the additive is appropriately determined in accordance with its purpose and use.

The two or more additives described above may be mixed in advance and prepared as a mixed additive. An example of the mixed additive includes pigment paste in which a pigment, a dispersant, and a solvent are mixed in advance.

The base coating material containing no base curing agent is produced as a one liquid-type coating material consisting of a base main agent.

Further, the base coating material containing a base curing agent is produced as, for example, a two liquid-type coating material including a base curing agent and a base main agent separately, or as a one liquid-type coating material in which a base curing agent and a base main agent are mixed in advance.

Preferably, the base coating material is produced as a one liquid-type coating material consisting of a base main agent without containing a base curing agent.

Then, in the application of the base coating material, when the base coating material is the one liquid-type, the base coating material is applied to the intermediate coating film 15 as it is. Further, for example, when the base coating material is the two liquid-type, the base main agent and the base curing agent are mixed, and the obtained mixture is applied to the intermediate coating film 15.

An application method is not particularly limited, and a known application method such as brush coating, gravure coating method, reverse coating method, roll coating method, bar coating method, spray coating method, air knife coating method, and dipping method is used.

An application amount of the base coating material is appropriately set in accordance with its purpose and use.

More specifically, a dry film thickness of the base coating film 16 is, for example, 8 µm or more, preferably 10 µm or more, and for example, 25 µm or less, preferably 20 µm or less.

### (3) Clear Step

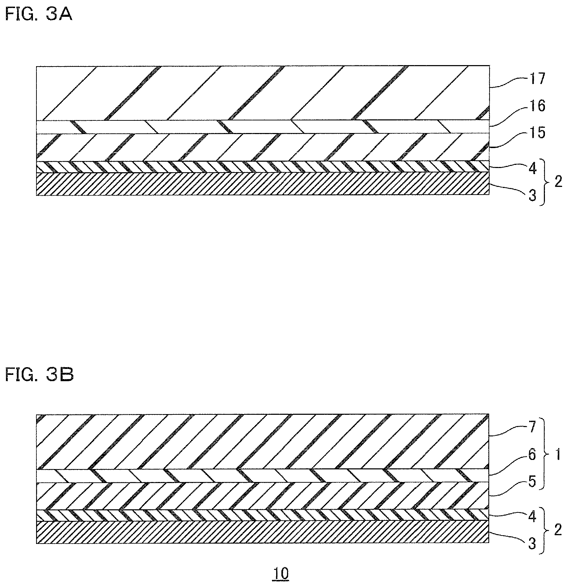

Next, in this step, as shown in FIG. 3A, a clear coating material is applied onto the above-described base coating film 16 to form the clear coating film 17 (clear step).

The clear coating material is a resin composition (clear resin composition) containing a clear main agent and a clear curing agent.

Examples of the clear main agent include the above-described aqueous resin having a hydroxyl group and the above-described oil-based resin having a hydroxyl group.

As the clear main agent, preferably, an acrylic resin is used, more preferably, an acrylic polyol is used, further more preferably, a hydrophobic acrylic polyol (organic solvent-based acrylic polyol) is used.

When the clear main agent contains the acrylic polyol, it is possible to improve the adhesive properties and the chipping properties.

Examples of the clear curing agent include epoxy curing agents, melamine curing agents, carbodiimide curing agents, aziridine curing agents, oxazoline curing agents, and isocyanate curing agents. These clear curing agents may be used alone or in combination of two or more.

As the clear curing agent, preferably, an isocyanate curing agent is used.

Examples of the isocyanate curing agent include the above-described polyisocyanate monomers and/or the above-described polyisocyanate derivatives. Further, an example of the isocyanate curing agent includes a blocked isocyanate in which an isocyanate group of the polyisocyanate monomer and/or the above-described polyisocyanate derivative is blocked by a known blocking agent. These isocyanate curing agents may be used alone or in combination of two or more.

As the clear curing agent, preferably, from the viewpoint of weather resistance and mechanical properties, an aliphatic polyisocyanate is used, more preferably, from the viewpoint of mechanical properties, a 1,5-pentanediisocyanate and/or a derivative of a 1,5-pentanediisocyanate are/is used, further more preferably, a derivative of a 1,5-pentanediisocyanate is used, particularly preferably, an isocyanurate derivative of a 1,5-pentanediisocyanate is used.

A content ratio of the clear main agent to the clear curing agent is appropriately set in accordance with the kind of the main agent of the clear main agent and the kind of the clear curing agent (kind and the number of functional groups and the like).

For example, though depending on the kind of the clear main agent and the kind of the clear curing agent, an equivalent ratio of the functional group (isocyanate group and the like) in the clear curing agent to the functional group (hydroxyl group and the like) in the clear main agent is, for example, 0.8 or more, preferably 0.9 or more, and for example, 1.4 or less, preferably 1.2 or less.

Further, on a mass basis, for example, a ratio of the clear main agent is, for example, 10 parts by mass or more, preferably 30 parts by mass or more, and for example, 99.5 parts by mass or less, preferably 95.0 parts by mass or less with respect to 100 parts by mass of the total amount of the clear main agent and the clear curing agent. Further, a ratio of the clear curing agent is, for example, 0.5 parts by mass or more, preferably 5 parts by mass or more, and for example, 90 parts by mass or less, preferably 70 parts by mass or less with respect to 100 parts by mass of the total amount of the clear main agent and the clear curing agent.

In addition, in the clear coating material, for example, if necessary, an additive may be blended into any one of or both the clear main agent and the clear curing agent. Examples of the additive include epoxy resins, catalysts (urethanization catalysts and the like), coatability improvers, leveling agents, viscosity modifiers, defoaming agents, stabilizers such as antioxidant and ultraviolet absorber, plasticizers, surfactants, pigments, solvents, surface modifiers, fillers, organic or inorganic fine particles, antifungal agents, and silane coupling agents. A mixing amount of the additive is appropriately determined in accordance with its purpose and use.

Further, the clear coating material is produced as, for example, a two liquid-type coating material including a clear curing agent and a clear main agent separately, or as a one liquid-type coating material in which a clear curing agent and a clear main agent are mixed in advance.

Preferably, the clear coating material is produced as a two liquid-type coating material in which a clear curing agent and a clear main agent are provided separately.

A curing temperature of the clear coating material is, for example, 100°C or less, preferably 80°C or less, and for example, 60°C or more.

Then, in the application of the clear coating material, when the clear coating material is the two liquid-type, the clear main agent and the clear curing agent are mixed, and the obtained mixture is applied to the base coating film 16. Alternatively, when the clear coating material is the one liquid-type, the clear coating material is applied to the base coating film 16 as it is.

An application method is not particularly limited, and a known application method such as brush coating, gravure coating method, reverse coating method, roll coating method, bar coating method, spray coating method, air knife coating method, and dipping method is used.

An application amount of the clear coating material is appropriately set in accordance with its purpose and use.

More specifically, a dry film thickness of the clear coating film 17 is, for example, 20 µm or more, preferably 25 µm or more, and for example, 60 µm or less, preferably 50 µm or less.

### (4) Thermosetting Step

Thereafter, in this method, as shown in FIG. 3B, the intermediate coating film 15, the base coating film 16, and the clear coating film 17 are thermally cured (thermosetting step).

A heating temperature is, for example, 100°C or less, preferably 80°C or less. Further, the heating temperature is, for example, 20°C or more, preferably 30°C or more.

Further, the curing time is, for example, two hours or less, preferably one hour or less. Further, the curing time is, for example, 10 minute or more, preferably 20 minutes or more.

Thus, the intermediate coating film 15 is thermally cured, and the intermediate coating layer 5 is obtained as a thermosetting product (intermediate coating resin cured product) of the intermediate coating material.

And, the base coating film 16 is thermally cured, and the base layer 6 is obtained as a thermosetting product (base resin cured product) of the base coating material.

When the base curing agent is not contained in the base coating material, the clear curing agent of the clear coating material (the clear coating film 17) penetrates into the base coating material (the base coating film 16) to cure the base coating film 16. In other words, the base layer 6 is obtained as a thermosetting product of the base main agent and the clear curing agent.

In addition, the clear coating film 17 is thermally cured, and the clear layer 7 is obtained as a thermosetting product of the clear coating material (clear resin cured product).

As a result, the multilayer film 1 including the intermediate coating layer 5, the base layer 6 disposed on the intermediate coating layer 5, and the clear layer 7 disposed on the base layer 6 is obtained.

If necessary, the multilayer film 1 which is thermally cured can be also further dried.

In such a case, a drying temperature may be a room temperature, and is, for example, 10°C or more, preferably 15°C or more, and for example, 40°C or less, preferably 30°C or less.

Further, the drying time is, for example, one minute or more, preferably five minutes or more, and for example, two hours or less, preferably one hour or less.

Thus, it is possible to produce the multilayer film 1 on the object 2 to be applied, and as a result, to obtain the coating panel 10 including the object 2 to be applied and the multilayer film 1.

In the above-described description, a 3 coat 1 bake method is used, and specifically, the intermediate coating film 15, the base coating film 16, and the clear coating film 17 are applied and laminated in a wet state, and then, the three coating films in a wet state are cured by heating at one time. Alternatively, if necessary, the intermediate coating film 15, the base coating film 16, and/or the clear coating film 17 can be also preheated at an appropriate timing.

More specifically, the preheating can be carried out, for example, at a timing such as after forming the intermediate coating film 15 and before forming the base coating film 16, or, for example, at a timing such as after forming the intermediate coating film 15 and the base coating film 16 and at the time of forming the clear coating film 17.

A preheating temperature is, for example, 100°C or less, preferably 80°C or less. Further, the preheating temperature is, for example, 20°C or more, preferably 30°C or more.

Further, the preheating time is, for example, 30 minutes or less, preferably 10 minutes or less. Further, the preheating time is, for example, one minute or more, preferably two minutes or more.

By the preheating, it is possible to improve the surface smoothness of the multilayer film 1.

Further, in the above-described thermosetting step, the intermediate coating film 15, the base coating film 16, and the clear coating film 17 may be individually cured without being cured by heating at one time. For example, the intermediate coating film 15, the base coating film 16, and the clear coating film 17 may be sequentially cured; after curing only the intermediate coating film 15 and the base coating film 16, the clear coating film 17 may be cured; and further, after curing only the intermediate coating film 15, the base coating film 16 and the clear coating film 17 may be cured.

In other words, a method for producing the multilayer film 1 is not limited to the description above, and for example, a 3 coat 3 bake method and a 3 coat 2 bake method may be also used.

For example, when the 3 coat 3 bake method is used, first, an intermediate coating material is applied and cured by heating to form the intermediate coating layer 5, then, a base coating material is applied onto the intermediate coating layer 5 (the intermediate coating film 15 after curing) and cured by heating to form the base layer 6, and then, a clear coating material is applied onto the base layer 6 (the base coating film 16 after curing) and cured by heating to form the clear layer 7. Even in such a method, the multilayer film 1 can be obtained.

### <Function and Effect>

Conventionally, a coating film is formed on the surface of a vehicle body, and the coating film protects the vehicle body, and designs are granted.

In such coating, usually, first, an undercoat layer is formed by electrodeposition coating and the like, and then, the intermediate coating layer, the base layer, and the clear layer are sequentially laminated on the undercoat layer to form a multilayer film.

As a method for producing a multilayer film, for example, a multilayer coating film forming method has been proposed which includes an intermediate coating film forming step of forming an intermediate coating film, a base coating film forming step of forming a base coating film on the uncured intermediate coating film, and a curing step of curing the intermediate coating film and the base coating film by heating.

Further, as a coating material composition used for forming an intermediate coating film, an intermediate coating material composition which contains an acrylic modified polyester resin, a hydroxyl group-containing acrylic resin, an aqueous polyurethane resin, and a blocked polyisocyanate, and in which the blocked polyisocyanate in which an isocyanate group is blocked by a diisopropyl malonate as an active methylene-based blocking agent has been proposed (ref: for example, WO 2014/054593 (Production Example 28)).

However, in the intermediate coating material composition described in WO 2014/054593, there is a limit in improving the appearance of the multilayer film, and it is also difficult to sufficiently ensure the weather resistance of the multilayer film. Further, in the intermediate coating material composition described in Patent Document 2, there is a problem that the chipping resistance is lowered in low-temperature curing which has been required in recent years.

On the other hand, in the above-described method for producing the multilayer film 1 and the multilayer film 1, the intermediate coating material is prepared as a two liquid-type of an intermediate coating main agent having a hydroxyl group and an intermediate coating curing agent containing the above-described blocked isocyanate.

In addition, a mole ratio of the latent isocyanate group in the intermediate coating curing agent to the hydroxyl group in the intermediate coating main agent is 0.2 or more and 1.5 or less. Therefore, it is possible to improve the appearance, the weather resistance, and the chipping resistance of the multilayer film at a good balance.

### Examples

Next, the present invention is further described based on Examples below. The present invention is however not limited by the following Examples. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF EMBODIMENTS". All designations of "part" or "parts" and "%" mean part or parts by mass and % by mass, respectively, unless otherwise particularly specified.

The details and abbreviations of each polyisocyanate, polyoxyethylene compound, high molecular weight polyol, and blocking agent used in Examples and Comparative Examples are described below. In addition, each calculation method used in Examples and Comparative Examples is described below.

### <Polyisocyanate>

TAKENATE D-170N: isocyanurate derivative mainly composed of trimer of hexamethylene diisocyanate (HDI), isocyanate group content of 20.7% by mass, solid content of 100% by mass, manufactured by Mitsui Chemicals, Inc.

TAKENATE D-160N: trimethylolpropane (TMP) adduct of hexamethylene diisocyanate (HDI), isocyanate group content of 12.6% by mass, solid content of 75% by mass, solvent, ethyl acetate, manufactured by Mitsui Chemicals, Inc.

STABiO D-370N: isocyanurate derivative mainly composed of trimer of pentamethylene diisocyanate (PDI), isocyanate group content of 25% by mass, solid content of 100% by mass, manufactured by Mitsui Chemicals, Inc.

TAKENATE D-127N: isocyanurate derivative mainly composed of trimer of bis(isocyanatomethyl)cyclohexane (H₆XDI), isocyanate group content of 13.5% by mass, solid content of 75% by mass, solvent, ethyl acetate, manufactured by Mitsui Chemicals, Inc.

TAKENATE D-140N: isocyanurate derivative mainly composed of trimer of isophorone diisocyanate (IPDI), isocyanate group content of 10.5% by mass, solid content of 75% by mass, solvent, ethyl acetate, manufactured by Mitsui Chemicals, Inc.

TAKENATE D-110N: trimethylolpropane (TMP) adduct of xylylene diisocyanate (XDI), isocyanate group content of 11.5% by mass, solid content of 75% by mass, solvent, ethyl acetate, manufactured by Mitsui Chemicals, Inc.

TAKENATE D-103H: trimethylolpropane (TMP) adduct of tolylene diisocyanate (TDI), isocyanate group content of 13.0% by mass, solid content of 75% by mass, manufactured by Mitsui Chemicals, Inc.

### <Polyoxyethylene Compound (POE)>

MePEG400: poly(oxyethylene) methyl ether, number average molecular weight of 400, manufactured by TOHO Chemical Industry Co., Ltd.

MePEG550: poly(oxyethylene) methyl ether, number average molecular weight of 550, manufactured by TOHO Chemical Industry Co., Ltd.

MePEG1000: poly(oxyethylene) methyl ether, number average molecular weight of 1000, manufactured by TOHO Chemical Industry Co., Ltd.

MePEG1500: poly(oxyethylene) methyl ether, number average molecular weight of 1500, manufactured by TOHO Chemical Industry Co., Ltd.

### <High Molecular Weight Polyol>

UH-50: polycarbonate diol, ETERNACOLL UH-50, number average molecular weight of 500, manufactured by UBE INDUSTRIES, LTD.

### <Blocking Agent>

TMPDO: 2,2,6,6-tetramethylpiperidine-4-one, manufactured by Tokyo Chemical Industry Co., Ltd.

TMPDI: 2,2,6,6-tetramethylpiperidine, manufactured by FUJIFILM Wako Pure Chemical Corporation

DMP: 3.5-dimethylpyrazole, manufactured by Tokyo Chemical Industry Co., Ltd.

DEM: diethyl maloate, manufactured by Tokyo Chemical Industry Co., Ltd.

### <Content Ratio of Oxyethylene Group in Hydrophilic Group-Containing Polyisocyanate>

Content ratio of oxyethylene group (% by mass)= charged amount of polyoxyethylene compound (parts by mass)/ [charged amount of polyisocyanate (parts by mass)+ charged amount of polyoxyethylene compound (parts by mass)]× 100

### <Content Ratio of High Molecular Weight Polyol>

Content ratio of high molecular weight polyol (% by mass)= charged amount of high molecular weight polyol (parts by mass)/ [charged amount of polyisocyanate (parts by mass)+ charged amount of high molecular weight polyol (parts by mass)]× 100

### <Preparation of Hydrophilic Group-Containing Polyisocyanate>

### <<Preparation Examples 1 to 8>>

A reaction vessel having a volume of 1 L and equipped with a stirrer, a thermometer, a condenser, and a nitrogen gas introduction pipe was charged with TAKENATE D-170N (isocyanurate derivative of hexamethylene diisocyanate (HDI), a solid content of 100% by mass) and MePEG550 (poly(oxyethylene) methyl ether) so as to have a formulation shown in Table 1 at room temperature (25°C), and a polyisocyanate and a polyoxyethylene compound were subjected to urethanization reaction at 90°C until there was no change in an amount of remaining isocyanate, thereby preparing a hydrophilic group-containing polyisocyanate.

Further, the isocyanate group content remaining in the hydrophilic group-containing polyisocyanate was determined by back titration using a dibutylamine. The results are shown in Table 1.

### <<Preparation Examples 9 to 11>>

A hydrophilic group-containing polyisocyanate was prepared in the same manner as in Preparation Example 5, except that MePEG550 (poly(oxyethylene) methyl ether) was changed to the polyoxyethylene compound shown in Table 2.

### <<Preparation Examples 12 to 17>>

A hydrophilic group-containing polyisocyanate was prepared in the same manner as in Preparation Example 5, except that TAKENATE D-170N was changed to the polyisocyanate shown in Table 2.

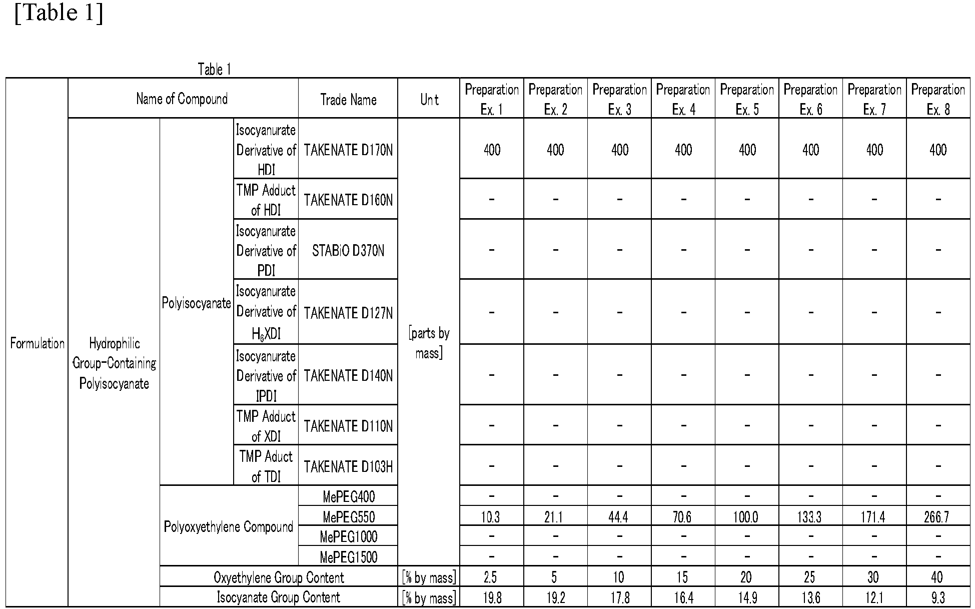

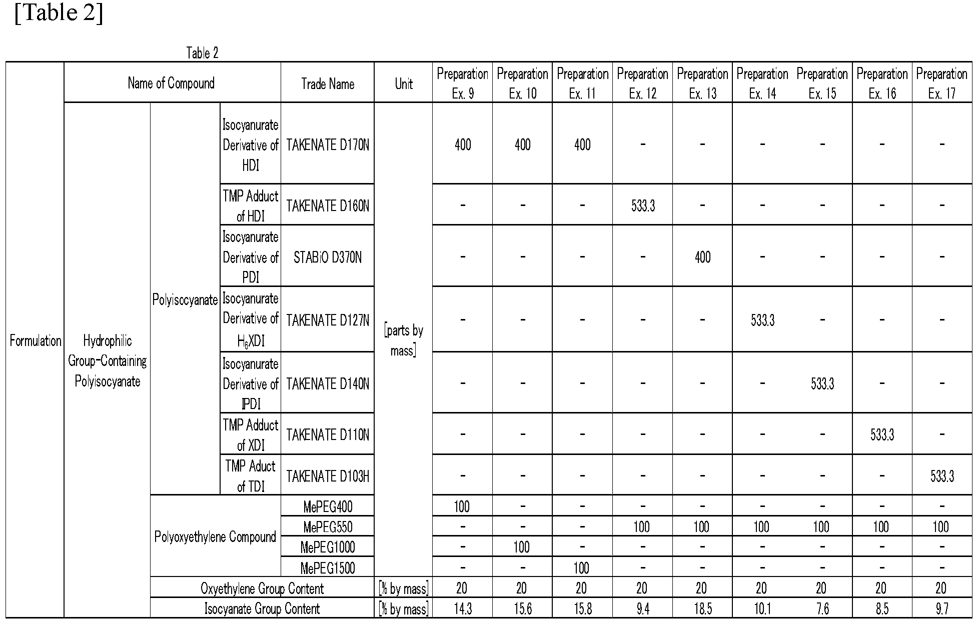

### <Preparation of Blocked Isocyanate>

### <<Examples 1 to 9>>

In a reaction vessel having a volume of 500 mL and equipped with a stirrer, a thermometer, a condenser, and a nitrogen gas introduction pipe, 187.972 parts by mass of propylene glycol monomethyl ether acetate (PMA) was added to each hydrophilic group-containing polyisocyanate of Preparation Examples shown in Table 3 at room temperature (25°C) to be mixed well. Thereafter, a 2,2,6,6-tetramethylpiperidine-4-one (TMPDO) was added so that an equivalent ratio (blocking agent/ NCO) of the blocking agent to the isocyanate group of the hydrophilic group-containing polyisocyanate was the value shown in Table 3. TMPDO was charged in a plurality of times so that a temperature of a reaction solution did not exceed 50°C. Thereafter, the isocyanate group and the blocking agent were reacted at room temperature (25°C) for five hours.

Thereafter, by measuring FT-IR spectrum, it was confirmed that the remaining isocyanate was 15% by mass or less and blocked.

Thus, a PMA solution of the blocked isocyanate was prepared. The solid content concentration of the PMA solution of the blocked isocyanate is shown in Table 3.

In the PMA solution of the blocked isocyanates of Examples 1 to 3, an emulsifier (EMULGEN 1108, polyoxyethylene alkyl ether emulsifier, manufactured by Kao Corporation) was added so that a mixing ratio of the emulsifier was 15% by mass with respect to the total sum of the solid content of the PMA solution of the blocked isocyanate and the emulsifier.

### <<Examples 10 to 17>> (Examples 11 and 12 are Reference Examples)

APMA solution of a blocked isocyanate was prepared in the same manner as in Example 5, except that the hydrophilic group-containing polyisocyanate of Preparation Example 5 was changed to each hydrophilic group-containing polyisocyanate of Preparation Examples shown in Table 4. The solid content concentration of the PMA solution of the blocked isocyanate is shown in Table 4.

### << Comparative Example 1>>

A PMA solution of an isocyanurate derivative of HDI was prepared in the same manner as in Example 5, except that no blocking agent was added. The solid content concentration of the PMA solution of the isocyanurate derivative of HDI is shown in Table 5.

### <<Comparative Examples 2 and 3>>

A PMA solution of a blocked isocyanate was prepared in the same manner as in Example 5, except that TMPDO was changed to the blocking agent shown in Table 5. The solid content concentration of the PMA solution of each blocked isocyanate of Comparative Examples is shown in Table 5.

### <<Comparative Examples 4 and 5>>

A PMA solution of a blocked isocyanate was prepared in the same manner as in Example 5, except that the hydrophilic group-containing polyisocyanate of Preparation Example 5 was changed to each hydrophilic group-containing polyisocyanate of Preparation Examples shown in Table 5.

### <<Comparative Example 6>>

A PMA solution of a blocked isocyanate was prepared in the same manner as in Example 5, except that the hydrophilic group-containing polyisocyanate of Preparation Example 5 was changed to TAKENATE D-170N (isocyanurate derivative of hexamethylene diisocyanate (HDI)).

### <<Comparative Example 7>>

A PMA solution of a blocked isocyanate was prepared by adding an emulsifier (EMULGEN 1108, polyoxyethylene alkyl ether-based emulsifier, manufactured by Kao Corporation) to the PMA solution of the blocked isocyanate of Comparative Example 6 so that a mixing ratio of the emulsifier was 15% by mass with respect to the total sum of the solid content of the PMA solution of the blocked isocyanate and the emulsifier.

The PMA solution of each blocked isocyanate of Comparative Examples 6 and 7 had low dispersibility in water, and a coating material composition to be described later could not be prepared.

### <<Comparative Example 8>>

A PMA solution of a blocked isocyanate was prepared by adding an emulsifier (EMULGEN 1108, polyoxyethylene alkyl ether-based emulsifier, manufactured by Kao Corporation) to the PMA solution of the blocked isocyanate of Comparative Example 2 so that a mixing ratio of the emulsifier was 15% by mass with respect to the total sum of the solid content of the PMA solution of the blocked isocyanate and the emulsifier.

### <<Comparative Example 9>>

A PMA solution of a blocked isocyanate was prepared by adding an emulsifier (EMULGEN 1108, polyoxyethylene alkyl ether-based emulsifier, manufactured by Kao Corporation) to the PMA solution of the blocked isocyanate of Comparative Example 3 so that a mixing ratio of the emulsifier was 15% by mass with respect to the total sum of the solid content of the PMA solution of the blocked isocyanate and the emulsifier.

### <Evaluation>

### 1. Gel Fraction

A water dispersion liquid (polyol component, main agent) obtained by dispersing an acrylic polyol (trade name: RE4788, manufactured by Mitsui Chemicals, Inc) in water was prepared. Then, a PMA solution of each blocked isocyanate of Examples and Comparative Examples was added to the acrylic polyol dispersion liquid (polyol component) so that a mol ratio of a hydroxyl group of the acrylic polyol to a latent isocyanate group of the blocked isocyanate was 1, and the obtained mixture was stirred for 30 minutes to prepare a coating material composition. The solid content concentration of a final process liquid was 30% by mass.

The coating material composition prepared as described above was applied to a polypropylene plate having a thickness of 250 µm with an applicator and cured at 80°C for 30 minutes. Thereafter, the cured coating film was immersed in a mixed solvent of acetone and methanol (acetone/ methanol= 1/ 1) at 23°C for 24 hours, and the mass of the component remaining without dissolution after immersion with respect to the mass of the coating film before immersion was calculated as a gel fraction. The results are shown in Tables 3 to 5.

### 2. Pot Life

A coating material composition was prepared in the same manner as in "1. Gel Fraction" described above. The coating material composition was left to stand at 25°C for 2 days to determine whether it could be applied or not.

Then, the pot life of the coating material composition was evaluated based on the following criteria. The results are shown in Tables 3 to 5.

Excellent: The viscosity of the coating material composition was low, and the coating material composition was easily applied.

Good: The viscosity of the coating material composition was slightly high, and the coating material composition was not easily applied.

Fair: Appliable, but there was a small amount of precipitate in the coating material composition.

Bad: The viscosity of the coating material composition was thickened and it could not be applied, or there was a large amount of precipitate in the coating material composition.

### 3. Solvent Resistance

A coating material composition was prepared in the same manner as in "1. Gel Fraction" described above. Then, the coating material composition was applied onto a tinplate substrate with an applicator of 100 µm and cured at 80°C for 30 minutes. Then, the cured coating film was rubbed 50 times with gauze immersed in an ethyl acetate to observe the coating film.

Then, the solvent resistance of the coating film was evaluated based on the following criteria. The results are shown in Tables 3 to 5.

Excellent: The coating film was not damaged.

Good: The coating film was slightly damaged.

Fair: The coating film was severely damaged.

Bad: The coating film was completely peeled off, or was dissolved.

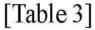

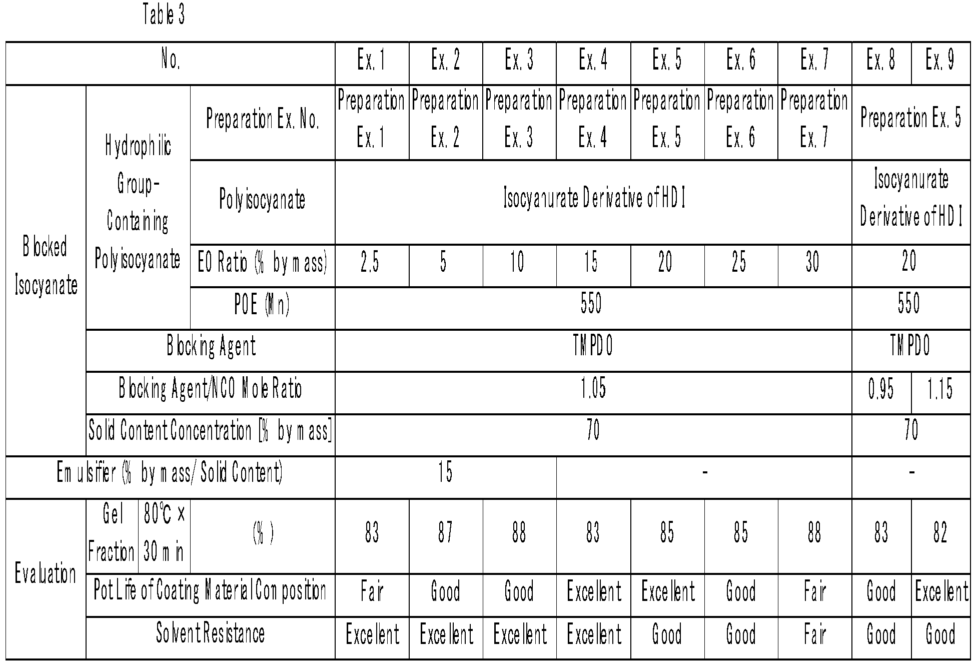

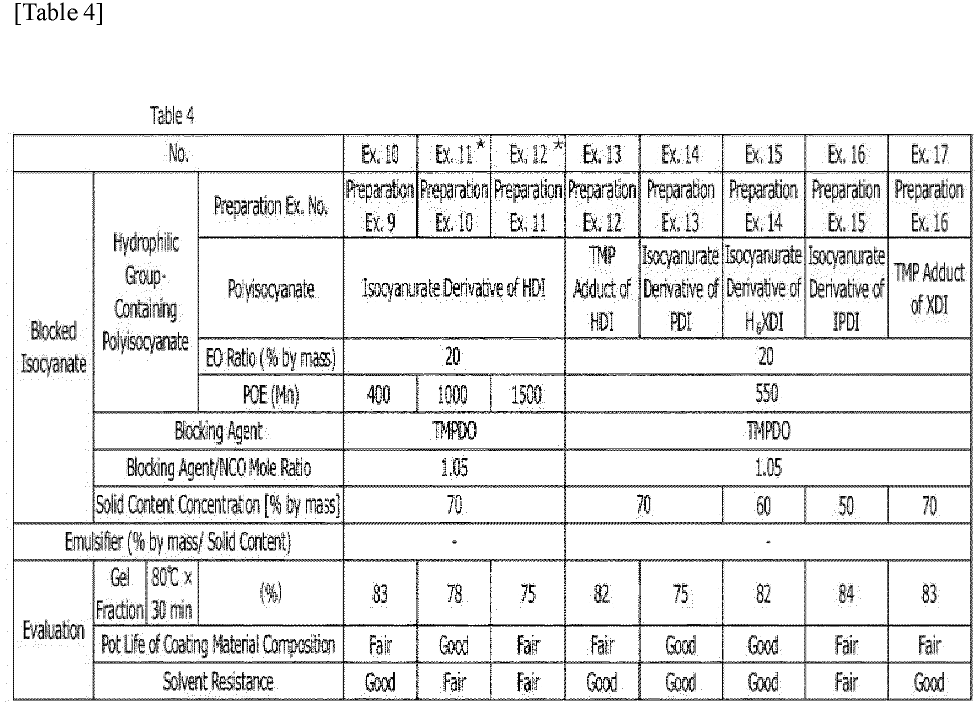

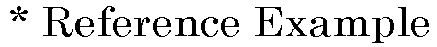

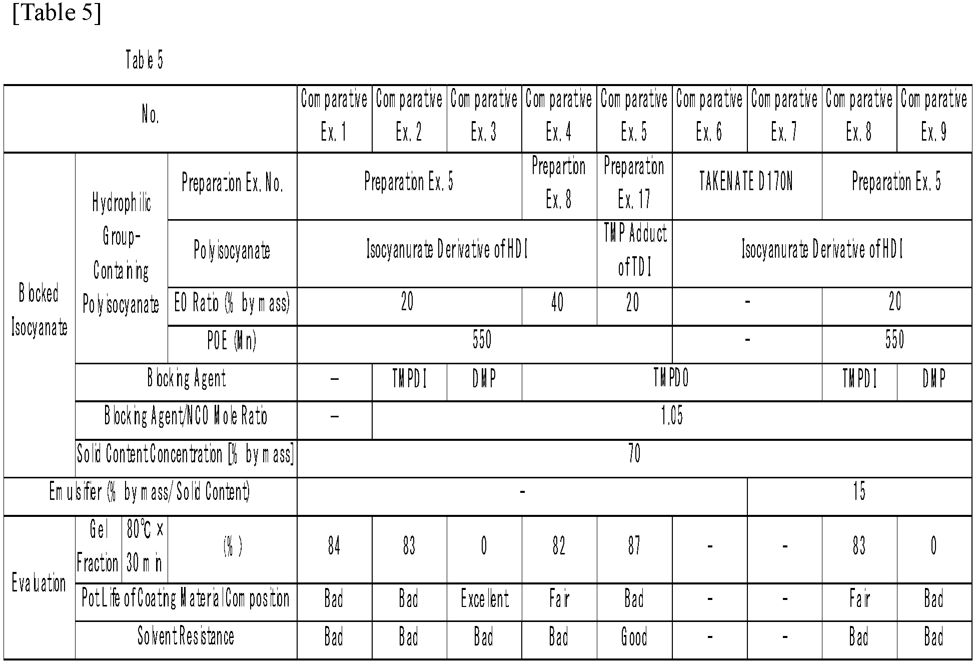

### <Preparation of Intermediate Coating Curing Agent>

### <<Preparation Examples 18 to 20>>

A reaction vessel having a volume of 1 L and equipped with a stirrer, a thermometer, a condenser, and a nitrogen gas introduction pipe was charged with TAKENATE D-170N (isocyanurate derivative of hexamethylene diisocyanate (HDI), a solid content of 100% by mass) and the polyoxyethylene compound (POE) shown in Table 6 so as to have a formulation shown in Table 6 at room temperature (25°C), and also charged with 27.8 parts by mass of diethylene glycol ethyl methyl ether (MEDG, manufactured by Tokyo Chemical Industry Co., Ltd.) as a solvent. Thereafter, the polyisocyanate and the polyoxyethylene compound were subjected to urethanization reaction at 90°C until there was no change in an amount of remaining isocyanate, thereby preparing an MEDG solution of a hydrophilic group-containing polyisocyanate.

Further, the isocyanate group content remaining in the MEDG solution of the hydrophilic group-containing polyisocyanate was determined by back titration using a dibutylamine. The results are shown in Table 6.

### <<Preparation Example 21>>

An MEDG solution of a hydrophilic group-containing polyisocyanate was prepared in the same manner as in Preparation Example 19, except that UH-50 (polycarbonate diol, a high molecular weight polyol) was charged together with TAKENATE D-170N and the polyoxyethylene compound so as to have the formulation shown in Table 6.

### <<Preparation Examples 22 to 24>>

An MEDG solution of a hydrophilic group-containing polyisocyanate was prepared in the same manner as in Preparation Example 19, except that TAKENATE D-170N was changed to the polyisocyanate shown in Table 6. In Preparation Examples 23 and 24, further, the formulation of the polyoxyethylene group-containing active hydrogen compound was changed to the value shown in Table 6.

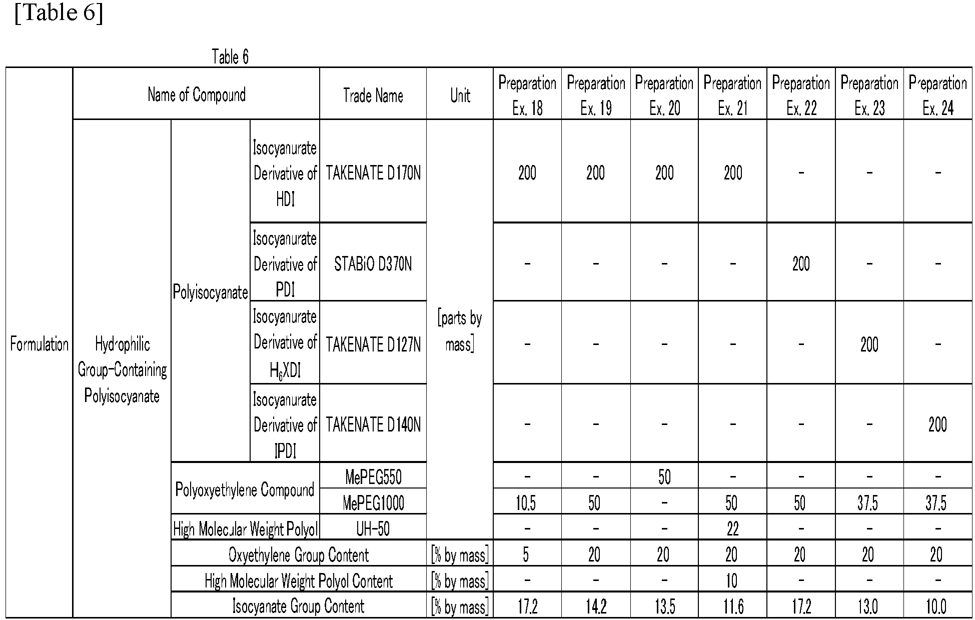

### <Preparation of Blocked Isocyanate>

### <<Preparation Examples 25 to 27>>

After 145 parts by mass of MEDG was added to 277.8 parts by mass of the MEDG solution of the hydrophilic group-containing polyisocyanate of Preparation Example 19 to be stirred, a 2,2,6,6-tetramethylpiperidine-4-one (TMPDO) was added so that an equivalent ratio (blocking agent/ NCO) of the blocking agent to the isocyanate group of the hydrophilic group-containing polyisocyanate was the value shown in Table 7. The TMPDO was charged in a plurality of times so that a temperature of a reaction solution did not exceed 40°C. Thereafter, the isocyanate group and the blocking agent were reacted at 60°C for five hours.

Thus, the MEDG solution of the blocked isocyanate was prepared. The solid content concentration of the MEDG solution of the blocked isocyanate was 70% by mass. Then, the MEDG solution of the blocked isocyanate was referred to as an intermediate coating curing agent.

### <<Preparation Example 28>>

An intermediate coating curing agent (MEDG solution of the blocked isocyanate) was prepared in the same manner as in Preparation Example 26, except that the MEDG solution of the hydrophilic group-containing polyisocyanate of Preparation Example 19 was changed to the MEDG solution of the hydrophilic group-containing polyisocyanate of Preparation Example 18. The solid content concentration of the MEDG solution of the blocked isocyanate was 70% by mass.

### <<Preparation Examples 29 to 33>>

An intermediate coating curing agent (MEDG solution of the blocked isocyanate) was prepared in the same manner as in Preparation Example 26, except that the MEDG solution of the hydrophilic group-containing polyisocyanate of Preparation Example 19 was changed to the MEDG solution of each hydrophilic group-containing polyisocyanate of Preparation Examples shown in Table 8. The solid content concentration of the MEDG solution of the blocked isocyanate was 70% by mass.

### <<Preparation Example 34>>

As shown in Table 9, an intermediate coating curing agent (MEDG solution of an isocyanurate derivative of HDI) was prepared in the same manner as in Preparation Example 26, except that no TMPDO was added. The solid content concentration of the MEDG solution of the blocked isocyanate was 70% by mass.

### <<Preparation Example 35>>

As shown in Table 9, after 146.7 parts by mass of MEDG was added to 277.8 parts by mass of the MEDG solution of the hydrophilic group-containing polyisocyanate of Preparation Example 19 to be stirred, a diethyl maloate (DEM) was added so that an equivalent ratio (blocking agent/ NCO) of the blocking agent to the isocyanate group of the hydrophilic group-containing polyisocyanate was 1.05. The DEM was charged in a plurality of times so that a temperature of a reaction solution did not exceed 40°C.

Thereafter, sodium methoxide SM-28 (solid content of 28% by mass) was added to the reaction solution in several times, and the isocyanate group and the blocking agent were reacted at 60°C for one hour. Then, a bis(2-ethylhexyl)phosphate was added to the reaction solution to prepare an intermediate coating curing agent (MEDG solution of the blocked isocyanate). The solid content concentration of the MEDG solution of the blocked isocyanate was 70% by mass.

### <<Preparation Example 36>>

As shown in Table 9, an intermediate coating curing agent (MEDG solution of the blocked isocyanates) was prepared in the same manner as in Preparation Example 26, except that the TMPDO was changed to a 3,5-dimethylpyrazole (DMP). The solid content concentration of the MEDG solution of the blocked isocyanate was 70% by mass.

### <Preparation of Pigment Paste>

### <<Preparation Example 37>>

Pigment paste was prepared by premixing 2.1 parts by mass of a commercially available dispersant of Disperbyk-180 (trade name, manufactured by BYK Japan KK), 29.6 parts by mass of ion-exchanged water, and 68.4 parts by mass of titanium dioxide (trade name: Ti-Pure R706, manufactured by DuPont) as a pigment with a disper, and then, dispersing the obtained mixture to a particle size of 5 µm or less with a bead mill to be then filtered.

### <Preparation of Base Coating Material>

### <<Preparation Example 38>>

A hydrophilic acrylic emulsion (acrylic polyol, trade name: Neocryl XK-110, manufactured by DSM Japan K.K., resin solid content of 46.5% by mass) was prepared. This was referred to as an aqueous resin (A). Further, a hydrophilic polyurethane dispersion (polyurethane polyol, trade name: W-5030, manufactured by Mitsui Chemicals, Inc., resin solid content of 30.0% by mass) was prepared. This was referred to as an aqueous resin (B).

Then, 32.3 parts by mass of the aqueous resin (A) described above, 21.5 parts by mass of the aqueous resin (B) described above, and 0.5 parts by mass of the leveling agent described above were added and stirred with a disper. This was referred to as a base main agent.

Then, 0.6 parts by mass of the above-described viscosity modifier, 31.4 parts by mass of the pigment paste of Preparation Example 24, 5.0 parts by mass of butyl cellosolve (solvent), and 5.0 parts by mass of deionized water were added, and 0.2 parts by mass of neutralizing agent (dimethylaminoethanol 10% aqueous solution) was added thereto to adjust a pH to 8.1. Thus, the base coating material was prepared.

### <Preparation of Clear Coating Material>

### <<Preparation Example 39>>

A clear coating material was prepared by mixing and stirring 61.8 parts by mass of acrylic polyol (clear main agent, Setalux 1753 SS-70, manufactured by Nuplex Resins, resin solid content of 70.0% by mass, hydroxyl value of 138.6 mgKOH/g), 25.8 parts by mass of butyl acetate (organic solvent), 12.4 parts by mass of SOLVESSO 150 (trade name, manufactured by Standard Oil Company, organic solvent), 0.1 parts by mass of BYK-331 (trade name, manufactured by BYK Japan KK, surface modifier), and 23.9 parts by mass of STABiO D-370 (clear curing agent, isocyanurate derivative of PDI) as an isocyanate curing agent.

An equivalent ratio (NCO/ OH) of an isocyanate group in the clear curing agent to a hydroxyl group in the clear main agent was 1.0.

### <Preparation of Intermediate Coating Material>

### <<Examples 18 to 28 and Comparative Examples 10 to 14>> (Examples 18-23 and 25-28 are Reference Examples)

The above-described aqueous resin (A) (32.3 parts by mass), 21.5 parts by mass of the above-described aqueous resin (B), and 0.5 parts by mass of leveling agent (commercially available product, trade name: SURFYNOL 440, manufactured by Nissin Chemical Industry Co., Ltd.) were added, and the obtained mixture was stirred with a disper. This was referred to as an intermediate coating main agent.

Then, 0.6 parts by mass of viscosity modifier (trade name: PRIMAL8-w, manufactured by The Dow Chemical Company), 46.0 parts by mass of the pigment paste of Preparation Example 37, 5.0 parts by mass of butyl cellosolve (solvent), and 5.0 parts by mass of deionized water were added, and 0.2 parts by mass of neutralizing agent (dimethylaminoethanol 10% aqueous solution) was added thereto to adjust a pH to 8.1.

Then, each intermediate coating curing agent shown in Tables 7 to 9 was added while stirring so that an equivalent ratio (latent NCO/ OH) of a latent isocyanate group of a blocked isocyanate to a hydroxyl group of an intermediate coating main agent was the values of Tables 7 to 9 to prepare an intermediate coating material.

### <Preparation of Multilayer Film>

A cationic electrodeposition plate (manufactured by Testpiece) was prepared as an object to be applied (preparation step).

Then, each intermediate coating material prepared as described above was applied onto the surface of the cationic electrodeposition plate with a hand spray gun (W-101, manufactured by ANEST IWATA Corporation) so as to have a dry film thickness of 20 µm to obtain an intermediate coating film (intermediate coating step).

Then, the obtained intermediate coating film was left to stand at room temperature (25°C) for five minutes, and the base coating material of Preparation Example 25 was applied onto the intermediate coating film so as to have a dry film thickness of 12 µm to obtain a base coating film (base step).

Next, the base coating film was left to stand at room temperature for five minutes and preheated at 80°C for five minutes.

Then, the resulting film was left to cool to room temperature (25°C), and the clear coating material of Preparation Example 26 was applied onto the base coating film so as to have a dry film thickness of 40 µm to obtain a clear coating film (clear step).

Thereafter, the obtained clear coating film was left to stand at room temperature (25°C) for 10 minutes, and baked at 80°C for 30 minutes to thermally cure each coating film (thermosetting step). In Comparative Examples 3 and 5, the thermosetting step was carried out at 140°C for 30 minutes.

Thus, an evaluation plate including a multilayer film was prepared.

### <Evaluation>

The intermediate coating material and the multilayer film were evaluated by the following method. The results are shown in Tables 7 to 9.

### (1) Pot Life of Intermediate Coating Material

After mixing the intermediate coating main agent and the intermediate coating curing agent, the obtained mixture was left to stand at 40°C, and evaluated in accordance with the following criteria.

Excellent: The gelation was not observed even for three hours or more.

Good: The gelation was observed for two hours or more and less than three hours.

Fair: The gelation was observed for one hour or more and less than two hours.

Bad: The gelation was observed for less than one hour.

### 2) Appearance of Coating Film

The appearance of the coating film of the obtained evaluation plate was evaluated by visual observation in accordance with the following criteria.

Good: When fluorescent light was projected to the coating film, the fluorescent light appeared fairly clear.

Fair: When fluorescent light was projected to the coating film, the fluorescent light was slightly blurred.

Bad: When fluorescent light was projected to the coating film, the periphery (contour) of the fluorescent light was remarkably blurred. Alternatively, bubbles were observed in the coating film.

### (3) Weather Resistance

The visual appearance and the adhesive properties of the appearance of the coating film for the obtained evaluation plate were evaluated with a Dew Panel Optical Control FDP (ultraviolet fluorescent light weather meter, irradiation intensity: 28 W/m²) in accordance with the following criteria. In addition, the adhesive properties were measured by a cross-cut adhesion test (1 mm× 100 cells).

Good: There was no abnormality in both the visual appearance and the adhesive properties.

Fair: The yellowing of the coating film was slightly observed in the visual appearance.

Bad: The yellowing of the coating film was remarkably observed in the visual appearance, and the peeling was also observed on the interface between the intermediate coating and the electrodeposition in the adhesive properties test.

### (4) Chipping Properties

The evaluation plate including a multilayer film was cooled to -20°C with a gravel meter tester, and then, a shot material (No. 7 crushed stone, 50 g) was set at a predetermined position so as to hit at an angle of 90° to be shot with 0.20 MPa air pressure.

Thereafter, the evaluation plate was taken out, and the broken coating film and the coating film at a place where floating was found were peeled using a pressure-sensitive adhesive tape.

Subsequently, a peeling state of the multilayer film in the evaluation plate was visually evaluated in accordance with the following criteria.

Excellent: The peeling was hardly recognized.

Good: Slight peeling was recognized.

Fair: A large number of slight peeling was recognized.

Bad: A large number of significant peeling was recognized.

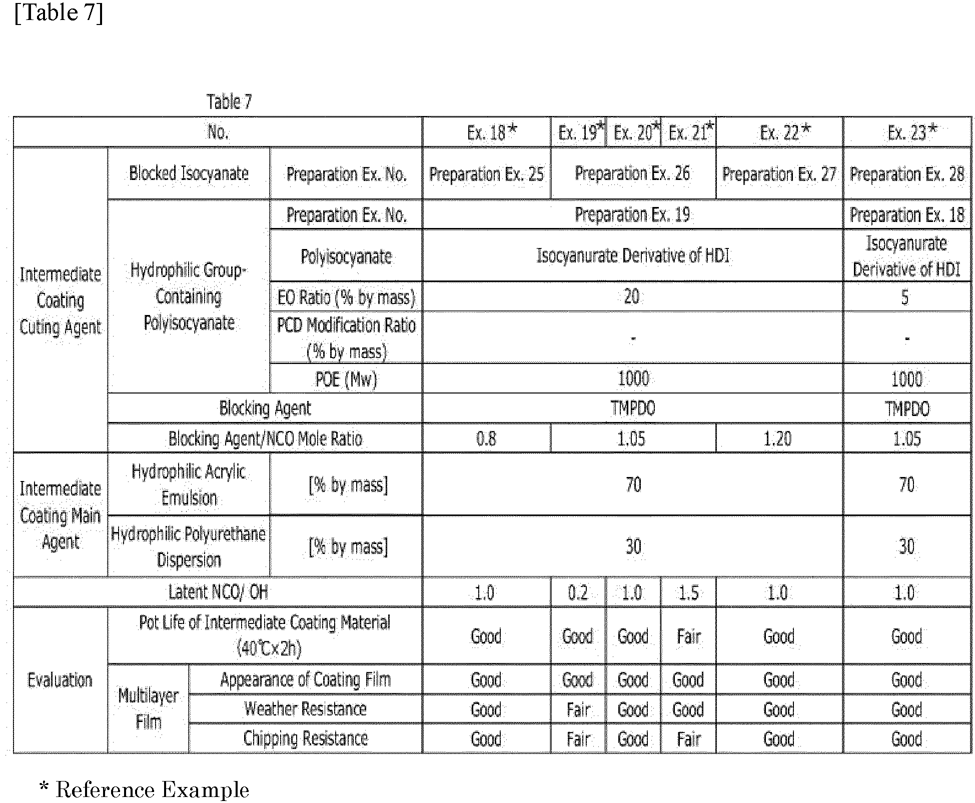

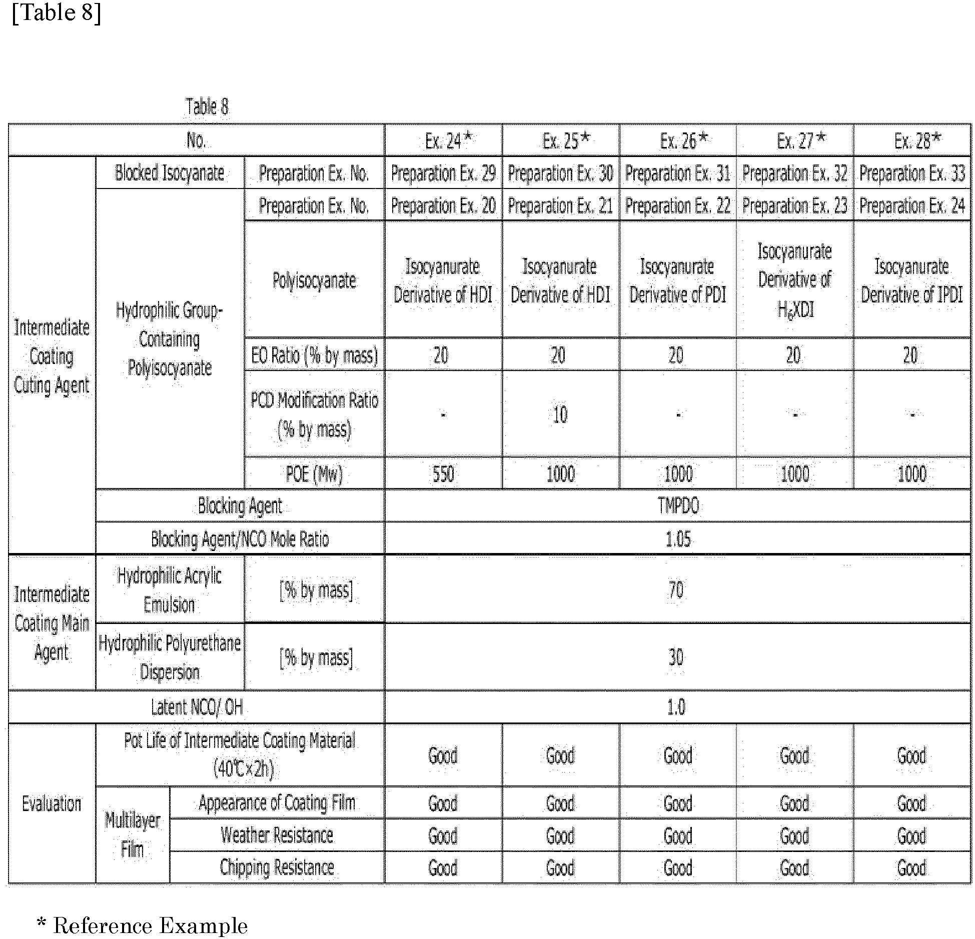

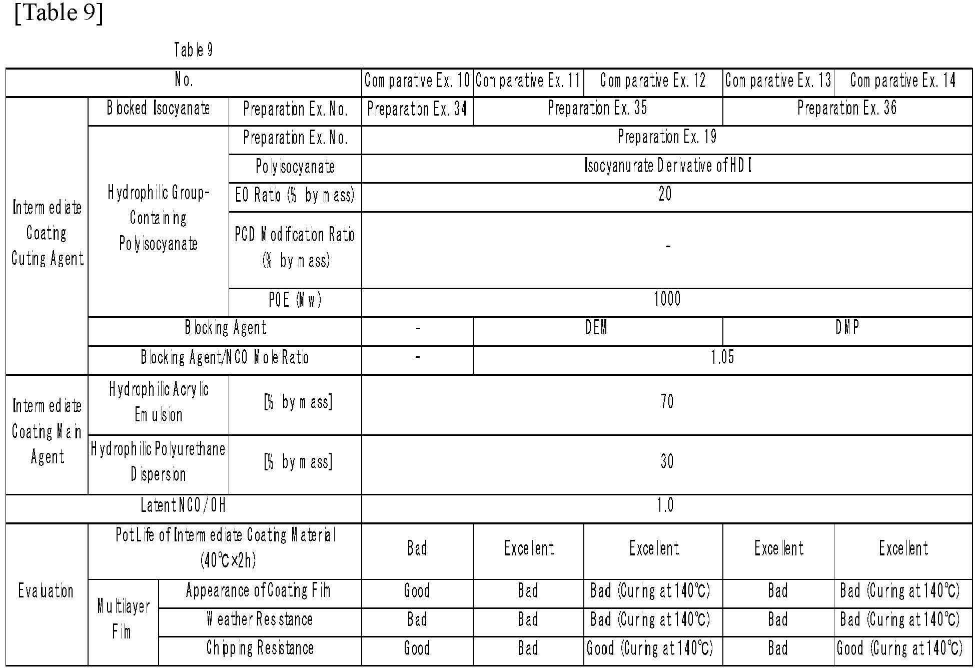

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### INDUSTRIAL APPLICATION

The blocked isocyanate of the present invention is, for example, preferably used as known resin raw material such as a polyurethane resin raw material, particularly, as an intermediate coating raw material.

### DESCRIPTION OF REFERENCE NUMBER

- 1: Multilayer film
- 5: Intermediate coating layer
- 6: Base layer
- 7: Clear layer

## Claims

1. A blocked isocyanate in which an isocyanate group of a hydrophilic group-containing polyisocyanate being a reaction product of a polyisocyanate and a polyoxyethylene compound is blocked by a blocking agent, wherein
the polyisocyanate includes an aliphatic polyisocyanate and/or an araliphatic polyisocyanate,
a number average molecular weight of the polyoxyethylene compound, as determined by gel permeation chromatography, is 400 or more and 800 or less,
the blocking agent includes a piperidone-based compound shown by the following general formula (1), and
the oxyethylene group content in the hydrophilic group-containing polyisocyanate is 1.0% by mass or more and 35% by mass or less. 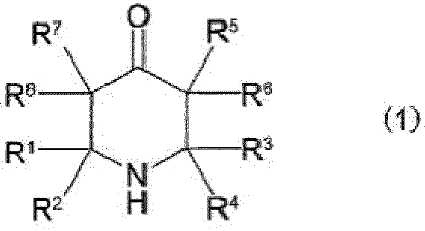
In general formula (1), each of R¹ to R⁴ represents an alkyl group having 1 to 4 carbon atoms. R¹ to R⁴ may be the same or different from each other. Each of R⁵ to R⁸ represents an alkyl group having 1 to 4 carbon atoms or a hydrogen atom. R⁵ to R⁸ may be the same or different from each other.

2. The blocked isocyanate according to claim 1, wherein
in the above-described general formula (1), each of R¹ to R⁴ represents a methyl group.

3. A method for producing a multilayer film including an intermediate coating layer, a base layer disposed on the intermediate coating layer, and a clear layer disposed on the base layer comprising:
an intermediate coating step of applying an intermediate coating material to an object to be applied to form an intermediate coating film,
a base step of applying a base coating material onto the intermediate coating film to form a base coating film,
a clear step of applying a clear coating material onto the base coating film to form a clear coating film, and
a thermosetting step of thermally curing the intermediate coating film, the base coating film, and the clear coating film, wherein
the intermediate coating material contains an intermediate coating main agent having a hydroxyl group and an intermediate coating curing agent containing the blocked isocyanate according to claim 1,
the blocked isocyanate contains a latent isocyanate group obtained by blocking an isocyante group of a hydrophilic group-containing polyisocyanate by a blocking agent; and
a mole ratio of the latent isocyanate group in the intermediate coating curing agent to the hydroxyl group in the intermediate coating main agent is 0.2 or more and 1.5 or less.

4. The method for producing a multilayer film according to claim 3, wherein
the piperidone-based compound contains a 2,2,6,6-tetramethylpiperidine-4-one.

5. The method for producing a multilayer film according to claim 3, wherein
the oxyethylene group content in the hydrophilic group-containing polyisocyanate is 2.5% by mass or more and 35% by mass or less.

6. The method for producing a multilayer film according to claim 3, wherein
in the intermediate coating material,
a mole ratio of the latent isocyanate group in the intermediate coating curing agent to the hydroxyl group in the intermediate coating main agent is 0.5 or more and 1.2 or less.

7. The method for producing a multilayer film according to claim 3, wherein
a curing temperature of the intermediate coating material is 80°C or less, and
a curing temperature of the clear coating material is 80°C or less.

8. The method for producing a multilayer film according to claim 3, wherein
the clear coating material contains a clear main agent and a clear curing agent, and
the clear curing agent contains an aliphatic polyisocyanate.

9. The method for producing a multilayer film according to claim 8, wherein
in the clear curing agent,
the aliphatic polyisocyanate includes a 1,5-pentanediisocyanate and/or a derivative of a 1,5-pentanediisocyanate.

10. The method for producing a multilayer film according to claim 3, wherein
the intermediate coating main agent contains
an acrylic resin having a hydroxyl group and
a polyurethane resin having a hydroxyl group.

11. The method for producing a multilayer film according to claim 10, wherein
in the intermediate coating main agent, in terms of solid content,
a ratio of the acrylic resin is 85% by mass or less and
a ratio of the polyurethane resin is 15% by mass or more
with respect to a total amount of the acrylic resin and the polyurethane resin.

12. The method for producing a multilayer film according to claim 3, wherein
the base coating material contains at least a base main agent, and
the base main agent contains an acrylic resin and a polyurethane resin.

13. The method for producing a multilayer film according to claim 12, wherein
in the base main agent, in terms of solid content,
a ratio of the acrylic resin is 85% by mass or less and
a ratio of the polyurethane resin is 15% by mass or more
with respect to a total amount of the acrylic resin and the polyurethane resin.

14. A multilayer film comprising:
an intermediate coating layer,
a base layer disposed on the intermediate coating layer, and
a clear layer disposed on the base layer, wherein
the intermediate coating layer is made of a thermosetting product of an intermediate coating material;
the intermediate coating material contains an intermediate coating main agent having a hydroxyl group and an intermediate coating curing agent including the blocked isocyanate according to claim 1,
the blocked isocyanate contains a latent isocyanate group obtained by blocking an isocyante group of a hydrophilic group-containing polyisocyanate by a blocking agent, and
a mole ratio of the latent isocyanate group in the intermediate coating curing agent to the hydroxyl group in the intermediate coating main agent is 0.2 or more and 1.5 or less.

## Patentansprüche

1. Blockiertes Isocyanat, bei dem eine Isocyanatgruppe eines eine hydrophile Gruppe enthaltenden Polyisocyanats, das ein Reaktionsprodukt eines Polyisocyanats und einer Polyoxyethylenverbindung ist, mit einem Blockierungsmittel blockiert ist, wobei
das Polyisocyanat ein aliphatisches Polyisocyanat und/oder ein araliphatisches Polyisocyanat umfasst,
ein zahlenmittleres Molekulargewicht der Polyoxyethylenverbindung, bestimmt durch Gelpermeationschromatographie, 400 oder mehr und 800 oder weniger beträgt,
das Blockierungsmittel eine Piperidon-basierte Verbindung, dargestellt durch die folgende allgemeine Formel (1), umfasst, und
der Gehalt an Oxyethylengruppen in dem eine hydrophile Gruppe enthaltenden Polyisocyanat 1,0 Massen-% oder mehr und 35 Massen-% oder weniger beträgt. 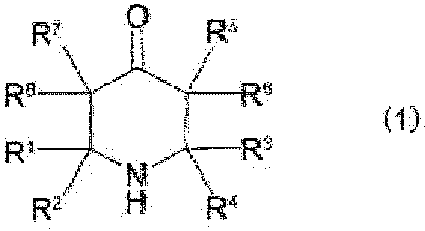
In der allgemeinen Formel (1) steht jedes von R¹ bis R⁴ für eine Alkylgruppe mit 1 bis 4 Kohlenstoffatomen. R¹ bis R⁴ können gleich oder verschieden voneinander sein. Jedes von R⁵ bis R⁸ steht für eine Alkylgruppe mit 1 bis 4 Kohlenstoffatomen oder ein Wasserstoffatom. R⁵ bis R⁸ können gleich oder verschieden voneinander sein.

2. Blockiertes Isocyanat gemäß Anspruch 1, wobei
in der oben beschriebenen allgemeinen Formel (1) jedes von R¹ bis R⁴ für eine Methylgruppe steht.

3. Verfahren zur Herstellung eines mehrschichtigen Films, der eine Zwischenbeschichtungsschicht, eine auf der Zwischenbeschichtungsschicht angeordnete Basisschicht und eine auf der Basisschicht angeordnete klare Schicht umfasst, umfassend:
einen Zwischenbeschichtungsschritt des Auftragens eines Zwischenbeschichtungsmaterials auf ein Objekt, auf das aufgetragen werden soll, um einen Zwischenbeschichtungsfilm zu bilden,
einen Basis-Schritt des Auftragens eines Basisbeschichtungsmaterials auf den Zwischenbeschichtungsfilm, um einen Basisbeschichtungsfilm zu bilden,
einen Klar-Schritt des Auftragens eines Klarbeschichtungsmaterials auf den Basisbeschichtungsfilm, um einen Klarbeschichtungsfilm zu bilden, und
einen Wärmehärtungsschritt des thermischen Härtens des Zwischenbeschichtungsfilms, des Basisbeschichtungsfilms und des Klarbeschichtungsfilms, wobei
das Zwischenbeschichtungsmaterial ein Zwischenbeschichtungshauptmittel mit einer Hydroxylgruppe und ein Zwischenbeschichtungshärtungsmittel, enthaltend das blockierte Isocyanat gemäß Anspruch 1, enthält,
das blockierte Isocyanat eine latente Isocyanatgruppe, erhalten durch Blockieren einer Isocyanatgruppe eines eine hydrophile Gruppe enthaltenden Polyisocyanats durch ein Blockierungsmittel, enthält; und
ein Molverhältnis von der latenten Isocyanatgruppe in dem Zwischenbeschichtungshärtungsmittel zu der Hydroxylgruppe in dem Zwischenbeschichtungshauptmittel 0,2 oder mehr und 1,5 oder weniger beträgt.

4. Verfahren zur Herstellung eines mehrschichtigen Films gemäß Anspruch 3, wobei
die Piperidon-basierte Verbindung ein 2,2,6,6-Tetramethylpiperidin-4-on enthält.

5. Verfahren zur Herstellung eines mehrschichtigen Films gemäß Anspruch 3, wobei
der Gehalt an Oxyethylengruppen in dem eine hydrophile Gruppe enthaltenden Polyisocyanat 2,5 Massen-% oder mehr und 35 Massen-% oder weniger beträgt.

6. Verfahren zur Herstellung eines mehrschichtigen Films gemäß Anspruch 3, wobei
in dem Zwischenbeschichtungsmaterial
ein Molverhältnis von der latenten Isocyanatgruppe in dem Zwischenbeschichtungshärtungsmittel zu der Hydroxylgruppe in dem Zwischenbeschichtungshauptmittel 0,5 oder mehr und 1,2 oder weniger beträgt.

7. Verfahren zur Herstellung eines mehrschichtigen Films gemäß Anspruch 3, wobei
eine Härtungstemperatur des Zwischenbeschichtungsmaterials 80°C oder weniger beträgt, und
eine Härtungstemperatur des Klarbeschichtungsmaterials 80°C oder weniger beträgt.

8. Verfahren zur Herstellung eines mehrschichtigen Films gemäß Anspruch 3, wobei
das Klarbeschichtungsmaterial ein Klar-Hauptmittel und ein Klar-Härtungsmittel enthält, und
das Klar-Härtungsmittel ein aliphatisches Polyisocyanat enthält.

9. Verfahren zur Herstellung eines mehrschichtigen Films gemäß Anspruch 8, wobei
in dem Klar-Härtungsmittel
das aliphatische Polyisocyanat ein 1,5-Pentandiisocyanat und/oder ein Derivat eines 1,5-Pentandiisocyanats umfasst.

10. Verfahren zur Herstellung eines mehrschichtigen Films gemäß Anspruch 3, wobei
das Zwischenbeschichtungshauptmittel
ein Acrylharz mit einer Hydroxylgruppe und
ein Polyurethanharz mit einer Hydroxylgruppe enthält.

11. Verfahren zur Herstellung eines mehrschichtigen Films gemäß Anspruch 10, wobei
in dem Zwischenbeschichtungshauptmittel, bezogen auf den Feststoffgehalt,
bezogen auf eine Gesamtmenge des Acrylharzes und des Polyurethanharzes,
ein Anteil des Acrylharzes 85 Massen-% oder weniger beträgt und
ein Anteil des Polyurethanharzes 15 Massen-% oder mehr beträgt.

12. Verfahren zur Herstellung eines mehrschichtigen Films gemäß Anspruch 3, wobei
das Basisbeschichtungsmaterial mindestens ein Basishauptmittel enthält, und
das Basishauptmittel ein Acrylharz und ein Polyurethanharz enthält.

13. Verfahren zur Herstellung eines mehrschichtigen Films Anspruch 12, wobei
in dem Basishauptmittel, bezogen auf den Feststoffgehalt,
bezogen auf eine Gesamtmenge des Acrylharzes und des Polyurethanharzes,
ein Anteil des Acrylharzes 85 Massen-% oder weniger beträgt und
ein Anteil des Polyurethanharzes 15 Massen-% oder mehr beträgt.

14. Mehrschichtiger Film, umfassend:
eine Zwischenbeschichtungsschicht,
eine auf der Zwischenbeschichtungsschicht angeordnete Basisschicht, und
eine auf der Basisschicht angeordnete klare Schicht, wobei
die Zwischenbeschichtungsschicht aus einem wärmehärtenden Produkt eines Zwischenbeschichtungsmaterials hergestellt ist;
das Zwischenbeschichtungsmaterial ein Zwischenbeschichtungshauptmittel mit einer Hydroxylgruppe und ein Zwischenbeschichtungshärtungsmittel, enthaltend das blockierte Isocyanat gemäß Anspruch 1, enthält,
das blockierte Isocyanat eine latente Isocyanatgruppe, erhalten durch Blockieren einer Isocyanatgruppe eines eine hydrophile Gruppe enthaltenden Polyisocyanats durch ein Blockierungsmittel, enthält, und
ein Molverhältnis von der latenten Isocyanatgruppe in dem Zwischenbeschichtungshärtungsmittel zu der Hydroxylgruppe in dem Zwischenbeschichtungshauptmittel 0,2 oder mehr und 1,5 oder weniger beträgt.

## Revendications

1. Isocyanate bloqué dans lequel un groupe isocyanate d'un polyisocyanate contenant un groupe hydrophile qui est un produit de réaction d'un polyisocyanate et d'un composé de polyoxyéthylène est bloqué par un agent bloquant, dans lequel
le polyisocyanate inclut un polyisocyanate aliphatique et/ou un polyisocyanate araliphatique,
un poids moléculaire moyen en nombre du composé de polyoxyéthylène, tel que déterminé par chromatographie par perméation sur gel, est de 400 ou plus et de 800 ou moins, l'agent bloquant inclut un composé à base de pipéridone représenté par la formule générale (1) suivante, et
la teneur en groupe oxyéthylène dans le polyisocyanate contenant un groupe hydrophile est de 1,0 % en masse ou plus et de 35 % en masse ou moins. 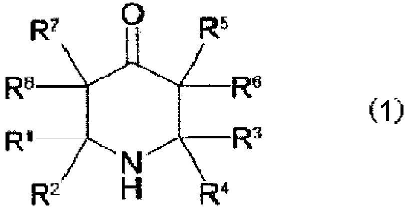
Dans la formule générale (1), chacun parmi R¹ à R⁴ représente un groupe alkyle ayant 1 à 4 atomes de carbone. R¹ à R⁴ peuvent être identiques les uns aux autres ou différents les uns des autres. Chacun parmi R⁵ à R⁸ représente un groupe alkyle ayant 1 à 4 atomes de carbone ou un atome d'hydrogène. R⁵ à R⁸ peuvent être identiques les uns aux autres ou différents les uns des autres.

2. Isocyanate bloqué selon la revendication 1, dans lequel
dans la formule générale (1) décrite ci-dessus, chacun parmi R¹ à R⁴ représente un groupe méthyle.

3. Procédé de production d'un film multicouche incluant une couche de revêtement intermédiaire, une couche de base disposée sur la couche de revêtement intermédiaire, et une couche transparente disposée sur la couche de base comprenant :
une étape de revêtement intermédiaire pour appliquer un matériau de revêtement intermédiaire sur un objet à appliquer pour former un film de revêtement intermédiaire,
une étape de base pour appliquer un matériau de revêtement de base sur le film de revêtement intermédiaire pour former un film de revêtement de base,
une étape de transparence pour appliquer un matériau de revêtement transparent sur le film de revêtement de base pour former un film de revêtement transparent, et
une étape de thermodurcissement pour durcir thermiquement le film de revêtement intermédiaire, le film de revêtement de base et le film de revêtement transparent, dans lequel
le matériau de revêtement intermédiaire contient un agent principal de revêtement intermédiaire ayant un groupe hydroxyle et un agent de durcissement de revêtement intermédiaire contenant l'isocyanate bloqué selon la revendication 1,
l'isocyanate bloqué contient un groupe isocyanate latent obtenu en bloquant un groupe isocyanate d'un polyisocyanate contenant un groupe hydrophile avec un agent bloquant ; et
un rapport molaire du groupe isocyanate latent dans l'agent de durcissement de revêtement intermédiaire par rapport au groupe hydroxyle dans l'agent principal de revêtement intermédiaire est de 0,2 ou plus et de 1,5 ou moins.

4. Procédé de production d'un film multicouche selon la revendication 3, dans lequel le composé à base de pipéridone contient une 2,2,6,6-tétraméthylpipéridin-4-one.

5. Procédé de production d'un film multicouche selon la revendication 3, dans lequel
la teneur en groupe oxyéthylène dans le polyisocyanate contenant un groupe hydrophile est de 2,5 % en masse ou plus et de 35 % en masse ou moins.

6. Procédé de production d'un film multicouche selon la revendication 3, dans lequel
dans le matériau de revêtement intermédiaire,
un rapport molaire du groupe isocyanate latent dans l'agent de durcissement de revêtement intermédiaire par rapport au groupe hydroxyle dans l'agent principal de revêtement intermédiaire est de 0,5 ou plus et de 1,2 ou moins.

7. Procédé de production d'un film multicouche selon la revendication 3, dans lequel
une température de durcissement du matériau de revêtement intermédiaire est de 80 °C ou moins, et
une température de durcissement du matériau de revêtement transparent est de 80 °C ou moins.

8. Procédé de production d'un film multicouche selon la revendication 3, dans lequel
le matériau de revêtement transparent contient un agent principal transparent et un agent de durcissement transparent, et
l'agent de durcissement transparent contient un polyisocyanate aliphatique.

9. Procédé de production d'un film multicouche selon la revendication 8, dans lequel
dans l'agent de durcissement transparent,
le polyisocyanate aliphatique inclut un 1,5-pentanediisocyanate et/ou un dérivé d'un 1,5-pentanediisocyanate.

10. Procédé de production d'un film multicouche selon la revendication 3, dans lequel
l'agent principal de revêtement intermédiaire contient
une résine acrylique ayant un groupe hydroxyle et
une résine de polyuréthane ayant un groupe hydroxyle.

11. Procédé de production d'un film multicouche selon la revendication 10, dans lequel
dans l'agent principal de revêtement intermédiaire, en termes de teneur en solides,
un rapport de la résine acrylique est de 85 % en masse ou moins et
un rapport de la résine de polyuréthane est de 15 % en masse ou plus
par rapport à une quantité totale de la résine acrylique et de la résine de polyuréthane.

12. Procédé de production d'un film multicouche selon la revendication 3, dans lequel
le matériau de revêtement de base contient au moins un agent principal de base, et
l'agent principal de base contient une résine acrylique et une résine de polyuréthane.

13. Procédé de production d'un film multicouche selon la revendication 12, dans lequel
dans l'agent principal de base, en termes de teneur en solides,
un rapport de la résine acrylique est de 85 % en masse ou moins et
un rapport de la résine de polyuréthane est de 15 % en masse ou plus
par rapport à une quantité totale de la résine acrylique et de la résine de polyuréthane.

14. Film multicouche comprenant :
une couche de revêtement intermédiaire,
une couche de base disposée sur la couche de revêtement intermédiaire, et
une couche transparente disposée sur la couche de base, dans lequel
la couche de revêtement intermédiaire est faite d'un produit thermodurcissable d'un matériau de revêtement intermédiaire ;
le matériau de revêtement intermédiaire contient un agent principal de revêtement intermédiaire ayant un groupe hydroxyle et un agent de durcissement de revêtement intermédiaire incluant l'isocyanate bloqué selon la revendication 1,
l'isocyanate bloqué contient un groupe isocyanate latent obtenu en bloquant un groupe isocyanate d'un polyisocyanate contenant un groupe hydrophile avec un agent bloquant, et
un rapport molaire du groupe isocyanate latent dans l'agent de durcissement de revêtement intermédiaire par rapport au groupe hydroxyle dans l'agent principal de revêtement intermédiaire est de 0,2 ou plus et de 1,5 ou moins.
